# EUROPÄISCHE PATENTANMELDUNG

(11) **EP 0 742 230 A2**
(43) Veröffentlichungstag der Anmeldung: **13.11.1996**
(21) Anmeldenummer: 96107060.4
(22) Anmeldetag: 06.05.1996
(51) Int. Cl.: C08B 37/16, C09D 5/03, G03G 9/097

(54) **Verwendung von Einschluss-Verbindungen ringförmiger Polysaccharide als Ladungssteuermittel**

(30) Priorität: 10.05.1995 DE 19951017034
(71) Anmelder: HOECHST AKTIENGESELLSCHAFT, 65929 Frankfurt am Main (DE)
(72) Erfinder: Baur, Rüdiger, Dr., 65817 Eppstein (DE); Macholdt, Hans-Tobias, Dr., 64297 Darmstadt-Eberstadt (DE)

(57) **Zusammenfassung**

Einschluß-Verbindungen, bestehend aus einer Wirt-Verbindung, die ein ringförmig verknüpftes Polysaccharid mit 3 bis 100 monomeren Saccharideinheiten ist und in ihrem molekularen Grundgerüst einen Hohlraum bildet, sowie aus einer oder mehreren in diesen Hohlraum als Gast-Verbindung eingeschlossenen chemischen Verbindung(en), werden als Ladungssteuermittel und Aufladungsverbesserer in elektrophotographischen Tonern und Entwicklern, in triboelektrisch oder elektrokinetisch versprühbaren Pulvern und Pulverlacken und in Elektretmaterialien verwendet.

## Beschreibung

Die vorliegende Erfindung liegt auf dem technischen Gebiet der Ladungssteuermittel in Tonern und Entwicklern für elektrophotographische Aufzeichnungsverfahren, in Pulvern und Pulverlacken zur Oberflächenbeschichtung, in Elektretmaterialien, insbesondere in Elektretfasern, sowie in Trennvorgängen.

Bei elektrophotographischen Aufzeichnungsverfahren wird auf einem Photoleiter ein "latentes Ladungsbild" erzeugt. Dieses "latente Ladungsbild" wird durch Aufbringen eines elektrostatisch geladenen Toners entwickelt, der dann beispielsweise auf Papier, Textilien, Folien oder Kunststoff übertragen und beispielsweise mittels Druck, Strahlung, Hitze oder Lösungsmitteleinwirkung fixiert wird. (L.B. Schein, "Electrophotography and Development Physics"; Springer Series in Electrophysics 14; Springer-Verlag, 1988).

Ein Maß für die Tonerqualität ist seine spezifische Aufladung q/m (Ladung pro Masseeinheit). Neben Vorzeichen und Höhe der elektrostatischen Aufladung ist vor allem das schnelle Erreichen der gewünschten Ladungshöhe und die Konstanz dieser Ladung über einen längeren Aktivierzeitraum hinweg ein entscheidendes Qualitätskriterium. Darüberhinaus ist die Unempfindlichkeit des Toners gegen Klimaeinflüsse, wie Temperatur und Luftfeuchtigkeit, ein weiteres wichtiges Eignungskriterium.

Sowohl positiv als auch negativ aufladbare Toner finden Verwendung in Kopierern und Laserdruckern in Abhängigkeit vom Verfahrens- und Gerätetyp.

Um elektrophotographische Toner oder Entwickler mit entweder positiver oder negativer Aufladung zu erhalten, werden häufig sogenannte Ladungssteuermittel zugesetzt. Da Tonerbindemittel in der Regel eine starke Abhängigkeit der Aufladung von der Aktivierzeit aufweise, ist es Aufgabe eines Ladungssteuermittels, zum einen Vorzeichen und Höhe der Toneraufladung einzustellen und zum anderen der Aufladungsdrift des Tonerbindemittels entgegenzuwirken und für Konstanz der Toneraufladung zu sorgen.

Ladungssteuermittel, die nicht verhindern können, daß der Toner oder Entwickler bei längerer Gebrauchsdauer eine hohe Ladungsdrift zeigt (Alterung), die sogar bewirken kann, daß der Toner oder Entwickler eine Ladungsumkehr erfährt, sind daher für die Praxis ungeeignet.

Während für Schwarztoner schwarze, blaue oder dunkle Ladungssteuermittel eingesetzt werden können, sind für Farbtoner wegen der Coloristik Ladungssteuermittel ohne Eigenfarbe erforderlich.

Bei Vollfarbtonern müssen die drei Toner Gelb, Cyan und Magenta neben den genau definierten farblichen Anforderungen auch hinsichtlich ihrer triboelektrischen Eigenschaften exakt aufeinander abgestimmt sein, da sie nacheinander im gleichen Gerät übertragen werden.

Von Farbmitteln ist bekannt, daß sie die triboelektrische Aufladung von Tonern teilweise nachhaltig beeinflussen können (H.-T. Macholdt, A. Sieber, Dyes & Pigments 9 (1988), 119-127). Wegen der unterschiedlichen triboelektrischen Effekte von Farbmitteln und des daraus resultierenden teilweise sehr ausgeprägten Einflusses auf die Toneraufladbarkeit ist es nicht möglich, die Farbmittel in eine einmal erstellte Tonerbasisrezeptur einfach hinzuzufügen. Vielmehr kann es notwendig werden, für jedes Farbmittel eine eigene Rezeptur zu erstellen, für welche Art und Menge des benötigten Ladungssteuermittels speziell zugeschnitten werden.

Da dieses Vorgehen sehr aufwendig ist, sind hochwirksame farblose Ladungssteuermittel erforderlich, die imstande sind, das unterschiedliche triboelektrische Verhalten verschiedener Farbmittel zu kompensieren und dem Toner die gewünschte Aufladung zu verleihen. Auf diese Art und Weise können triboelektrisch sehr unterschiedliche Farbmittel anhand einer einmal erstellten Tonerbasisrezeptur mit ein und demselben Ladungssteuermittel in den verschiedenen erforderlichen Tonern (Gelb, Cyan, Magenta und gegebenenfalls Schwarz) eingesetzt werden.

Darüberhinaus ist für die Praxis wichtig, daß die Ladungssteuermittel eine hohe Thermostabilität und eine gute Dispergierbarkeit besitzen. Typische Einarbeitungstemperaturen für Ladungssteuermittel in die Tonerharze liegen bei Verwendung von Knetern oder Extrudern zwischen 100°C und 200°C. Dementsprechend ist eine Thermostabilität von 200°C, besser noch 250°C, von großem Vorteil. Wichtig ist auch, daß die Thermostabilität über einen längeren Zeitraum (ca. 30 Minuten) und in verschiedenen Bindemittelsystemen gewährleistet ist. Dies ist bedeutsam, da immer wieder auftretende Matrixeffekte zum frühzeitigen Zersetzen des Ladungssteuermittels im Tonerharz führen, wodurch eine dunkelgelbe oder dunkelbraune Färbung des Tonerharzes erfolgt und der Ladungssteuereffekt ganz oder teilweise verloren geht. Typische Tonerbindemittel sind Polymerisations-, Polyadditions- und Polykondensationsharze wie Styrol-, Styrolacrylat-, Styrolbutadien-, Acrylat-, Polyester-, Phenol-Epoxidharze, einzeln oder in Kombination, die noch weitere Inhaltsstoffe, wie Farbmittel, Wachse oder Fließhilfsmittel, enthalten können oder im Nachhinein zugesetzt bekommen können.

Für eine gute Dispergierbarkeit ist es von großem Vorteil, wenn das Ladungssteuermittel möglichst keine wachsartigen Eigenschaften, keine Klebrigkeit und einen Schmelz- oder Erweichungspunkt von > 150°C, besser > 200°C, aufweist. Eine Klebrigkeit führt häufig zu Problemen beim Zudosieren in die Tonerformulierung, und niedrige Schmelz- oder Erweichungspunkte können dazu führen, daß beim Eindispergieren keine homogene Verteilung erreicht wird, da sich das Material tröpfchenförmig im Trägermaterial zusammenschließt.

Außer in elektrophotographischen Tonern und Entwicklern können Ladungssteuermittel auch zur Verbesserung der elektrostatischen Aufladung von Pulvern und Lacken, insbesondere in triboelektrisch oder elektrokinetisch versprühten Pulverlacken, wie sie zur Oberflächenbeschichtung von Gegenständen aus beispielsweise Metall, Holz, Kunststoff, Glas, Keramik, Beton, Textilmaterial, Papier oder Kautschuk zur Anwendung kommen, eingesetzt werden. Die Pulverlacktechnologie kommt beispielsweise beim Lackieren von Gegenständen, wie Gartenmöbeln, Campingartikeln, Haushaltsgeräten, Fahrzeugteilen, Kühlschränken und Regalen, sowie beim Lackieren von kompliziert geformten Werkstücken zur Anwendung. Der Pulverlack oder das Pulver erhält seine elektrostatische Aufladung im allgemeinen nach einem der beiden folgenden Verfahren:
a) Beim Corona-Verfahren wird der Pulverlack oder das Pulver an einer geladenen Corona vorbeigeführt und hierbei aufgeladen,
b) beim triboelektrischen oder elektrokinetischen Verfahren wird vom Prinzip der Reibungselektrizität Gebrauch gemacht.

Der Pulverlack oder das Pulver erhalten im Sprühgerät eine elektrostatische Aufladung, die der Ladung des Reibungspartners, im allgemeinen ein Schlauch oder Sprührohr, beispielsweise aus Polytetrafluorethylen, entgegengesetzt ist.

Auch eine Kombination von beiden Verfahren ist möglich. Als Pulverlackharze werden typischerweise Epoxidharze, carboxyl- und hydroxylgruppenhaltige Polyesterharze, Polyurethan- und Acrylharze zusammen mit den üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt.

Typische Härterkomponenten für Epoxidharze sind beispielsweise Säureanhydride, Imidazole sowie Dicyandiamid und deren Abkömmlinge. Für hydroxylgruppenhaltige Polyesterharze sind typische Härterkomponenten beispielsweise Säureanhydride, verkappte Isocyanate, Bisacylurethane, Phenolharze und Melaminharze. Für carboxylgruppenhaltige Polyesterharze sind typische Härterkomponenten beispielsweise Triglycidylisocyanurate oder Epoxidharze. In Acrylharzen kommen als typische Härterkomponenten beispielsweise Oxazoline, Isocyanate, Triglycidylisocyanurate oder Dicarbonsäuren zur Anwendung.

Der Nachteil einer ungenügenden Aufladung ist vor allem bei triboelektrisch oder elektrokinetisch versprühten Pulvern und Pulverlacken, die auf Basis von Polyesterharzen, insbesondere carboxylgruppenhaltigen Polyestern, oder auf der Basis von sogenannten Mischpulvern, auch Hybridpulver genannt, hergestellt worden sind, zu beobachten. Unter Mischpulvern versteht man Pulverlacke, deren Harzbasis aus einer Kombination von Epoxidharz und carboxylgruppenhaltigem Polyesterharz besteht. Die Mischpulver bilden die Basis für die in der Praxis am häufigsten vertretenen Pulverlacke. Ungenügende Aufladung der oben genannten Pulver und Pulverlacke führt dazu, daß Abscheidequote und Umgriff am zu beschichtenden Werkstück ungenügend sind. Der Ausdruck "Umgriff" ist ein Maß dafür, inwieweit sich ein Pulver oder Pulverlack am zu beschichtenden Werkstück auch an Rückseiten, Hohlräumen, Spalten und vor allem an Innenkanten und -ecken abscheidet.

Darüberhinaus ist gefunden worden, daß Ladungssteuermittel das Aufladungs- sowie das Ladungsstabilitätsverhalten von Elektretmaterialien, insbesondere Elektretfasern, erheblich verbessern können (DE-A-43 21 289). Elektretfasern sind bisher hauptsächlich im Zusammenhang mit dem Problem der Feinststaubfiltration beschrieben worden. (Z.B. von Biermann, "Evaluation of permanently charged electrofibrous filters", 17. DOE Nuclear Air Cleaning Conference, Denver, USA, (1982) sowie in Chemiefasern/Textilindustrie 40/92, (1990/91). Die beschriebenen Filtermaterialien unterscheiden sich sowohl hinsichtlich der Materialien, aus denen die Fasern bestehen als auch bezüglich der Art und Weise, wie die elektrostatische Ladung auf die Fasern aufgebracht wird. Typische Elektretmaterialien basieren auf Polyolefinen, halogenierten Polyolefinen, Polyacrylaten, Polyacrylnitrilen, Polystyrolen oder Fluorpolymeren, wie beispielsweise Polyethylen, Polypropylen, Polytetrafluorethylen und perfluoriertes Ethylen und Propylen, oder auf Polyestern, Polycarbonaten, Polyamiden, Polyimiden, Polyetherketonen, auf Polyarylensulfiden, insbesondere Polyphenylensulfiden, auf Polyacetalen, Celluloseestern, Polyalkylenterephthalaten sowie Mischungen daraus. Elektretmaterialien, insbesondere Elektretfasern, können beispielsweise zur (Feinst-)Staubfiltration eingesetzt werden. Die Elektretmaterialien können ihre Ladung auf unterschiedliche Weise erhalten, nämlich durch Corona- oder Triboaufladung.

Weiterhin ist bekannt, daß Ladungssteuermittel in elektrostatischen Trennvorgängen, insbesondere in Trennvorgängen von Polymeren verwendet werden können. So beschreiben Y. Higashiyama et al. (J. Electrostatics 30, pp 203-212 (1993)) am Beispiel des äußerlich aufgebrachten Ladungssteuermittels Trimethyl-phenyl-ammonium-tetraphenylborat, wie Polymere für Recyclingzwecke voneinander getrennt werden können. Ohne Ladungssteuermittel laden sich "Low Density Polyethylen (LDPE)" und "High Density Polyethylen" (HDPE) reibungselektrisch weitestgehend ähnlich auf. Nach Ladungssteuermittelzugabe laden sich LDPE stark positiv und HDPE stark negativ auf und lassen sich so gut trennen. Neben der äußerlichen Aufbringung der Ladungssteuermittel kann auch grundsätzlich an eine Einarbeitung derselben in das Polymer gedacht werden, um beispielsweise ein Polymer innerhalb der triboelektrischen Spannungsreihe zu verschieben und eine entsprechende Trennwirkung zu erhalten. Ebenso lassen sich auf diese Weise andere Polymere wie z.B. Polypropylen (PP) und/oder Polyethylenterephthalat (PET) und/oder Polyvinylchlorid (PVC) voneinander trennen.

Ebenso lassen sich auch z.B. Salzmineralien besonders gut selektiv trennen, wenn ihnen zuvor ein Oberflächenzusatz zugegeben wurde (Oberflächenkonditionierung), der die substratspezifische elektrostatische Aufladung verbessert (A. Singewald, L. Ernst, Zeitschrift für Physikal. Chem. Neue Folge, Bd. 124, S. 223-248 (1981).

Weiterhin werden Ladungssteuermittel als "Electroconductivity Providing Agents" (ECPA) (JP 05 163 449-A) in Tinten für Tintenstrahldrucker eingesetzt.

Ladungssteuermittel sind in der Literatur zahlreich bekannt. Allerdings weisen die bisher bekannten Ladungssteuermittel eine Reihe von Nachteilen auf, die den Einsatz in der Praxis stark einschränken oder gar unmöglich machen. So können Ladungssteuermittel, wie die in US-PS 4 656 112 beschriebenen Schwermetallkomplexe, oder die in EP-A-0 469 544 beschriebenen Azine und Nigrosine wegen ihrer Eigenfarbe in Bunttonern sowie in weißen oder bunten Pulverlacken nicht eingesetzt werden.

Farblose Ladungssteuermittel auf Ammonium- und Immoniumbasis sind oft empfindlich gegen Licht oder mechanische Einwirkungen (US-PS 4 683 188) und thermisch labil, so daß sie Zersetzungsprodukte bilden, die sich nachteilig auf die triboelektrische Aufladung des Toners auswirken können (US-PS 4 684 596) und/oder eine starke, oft dunkelbraune, Eigenfarbe aufweisen. Darüberhinaus sind sie oft wachsartig, zum Teil wasserlöslich und/oder besitzen geringe Wirksamkeit als Ladungssteuermittel.

An sich geeignete Ladungssteuermittel auf Basis hochgradig fluorierter Ammonium- und Immoniumverbindungen (US-PS 5 069 994) haben den Nachteil einer aufwendigen Synthese, wodurch hohe Herstellungskosten für die entsprechenden Substanzen anfallen, und sind nicht ausreichend thermostabil.

Ladungssteuermittel auf Basis polymerer Ammoniumverbindungen (DE-A-4 029 653) führen zum Teil zu Amingeruch des Toners oder Entwicklers, und die Ladungskontrolleigenschaften dieser Substanzen können sich relativ leicht durch Oxidation und Feuchtigkeitsaufnahme ändern. Des weiteren sind die Oxidationsprodukte gefärbt und daher störend vor allem in Farbtonern. Die vorstehend genannten Ladungssteuermittel für elektrophotographische Toner und Entwickler sind aufgrund ihrer Farbigkeit sowie ihrer mangelnden Thermostabilität für den Einsatz in den überwiegend weißen oder klaren triboelektrisch oder elektrokinetisch versprühten Pulvern und Pulverlacken nicht geeignet. Des weiteren schränkt mangelnde Thermostabilität den Einsatz derartiger Ladungssteuermittel stark ein, da Pulverlacke beispielsweise bei über 200°C 15 Minuten lang eingebrannt werden. Die in US-PS 5 069 994 beanspruchten Ladungssteuermittel für Pulver und Pulverlacke sind aufgrund von Wachsartigkeit und Wasserlöslichkeit oder Hygroskopie schlecht zu handhaben und nur eingeschränkt anwendbar.

Die in EP-A-0 367 162 und in EP-A-0 476 647 beschriebenen Ammoniumverbindungen haben den Nachteil einer zu geringen Thermostabilität, der Unverträglichkeit mit speziellen Polyesterharzsystemen, sowie den des hohen Preises.

Ammoniumsalze auf Basis von Sulfoisophthalsäure und deren Derivate, wie z.B. in US-PS 4 789 614 beschrieben, haben wiederum den Nachteil einer geringen Stabilität in üblichen Bindemittelsystemen. So zeigen sie, 1 %ig in ein typisches Tonerbindemittel (Styrolacrylat oder Polyester) eingearbeitet, schon bei niedrigen Temperaturen (120 bis 140°C) bereits nach wenigen Minuten eine deutliche Vergilbung, was ihren Praxiseinsatz unmöglich macht.

Die in DE-A-4 037 518 beanspruchten Sulfoisophthalsäureharze haben den Nachteil, nur dann eine ausgeprägte Wirkung zu zeigen, wenn sie als dominierende Trägerkomponente eingesetzt werden, und führen dann zu Systemen mit einer oftmals unstabilen negativen Aufladung. Zur Erzielung einer Ladungsstabilität oder um gar eine positive Aufladung einzustellen, muß dem Bindemittel zusätzliches Ladungssteuermittel zugesetzt werden.

Die Aufgabe der vorliegenden Erfindung war es daher, verbesserte, besonders wirksame farblose Ladungssteuermittel zu finden. Neben dem schnellen Erreichen und der Konstanz der Aufladung sollen die Verbindungen eine hohe Thermostabilität (Zersetzungstemperatur > 200°C) aufweisen. Weiterhin sollten sie in verschiedenen praxisnahen Tonerbindemitteln wie Polyestern, Polystyrolacrylaten oder Polystyrolbutadienen/Epoxidharzen gut und unzersetzt dispergierbar sein. Darüberhinaus sollten sie öko/toxikologisch unbedenklich, d.h. ungiftig sowie schwermetallfrei sein. Weiterhin sollte ihre Wirkung unabhängig von der Harz/Carrier-Kombination sein, um eine breite Anwendung zu erschließen. Ebenso sollten sie in gängigen Pulverlack-Bindemitteln und Elektretmaterialien wie z.B. Polyethylenstyrol (PES), Epoxid-PES-Epoxyhybrid, Polyurethan sowie Acrylsystemen gut und unzersetzt dispergierbar sein und zu keiner Verfärbung der Harze führen.

Überraschenderweise hat es sich nun gezeigt, daß aus der Vielzahl bekannter Zucker-Verbindungen bestimmte Einschluß-Verbindungen ringförmiger Polysaccharide, substituiert oder unsubstituiert, gute Ladungssteuereigenschaften und hohe Thermostabilität besitzen. Darüberhinaus sind diese Verbindungen ohne Eigenfarbe und lassen sich hervorragend in unterschiedlichen Toner-, Pulverlack- und Elektretbindemitteln dispergieren. Ihr besonderer Vorteil liegt darin, daß durch geeignete Wahl der Einschluß-Verbindung die Ladungssteuereigenschaften, Thermostabilitäten und Dispergierqualitäten auf die gewünschten Anforderungen selektiv eingestellt werden können.

Aus der großen Zahl der Zucker-Derivate (Saccharide), bestehend aus einer Vielzahl von Mono-, Di- und Tri-Sacchariden, offenkettigen und cyclischen Oligosacchariden, Polysacchariden, wie Xanthanen, um nur einige zu nennen, zeigt die kleine Gruppe der ringförmig verknüpften Polysaccharide, und hierbei insbesondere die aus Glukoseeinheiten bestehenden Cyclodextrine, aufgrund ihres cyclischen molekularen Grundgerüstes eine besondere Affinität, Gast-Moleküle und -Ionen einzuschließen und in das Kristallgitter einzubauen. Hierbei bleibt im Gegensatz zu den meisten anderen Zucker-Derivaten, die häufig klebrig oder leicht zersetzlich sind, das mehrheitlich kristalline Verhalten, die vorteilhafte Rieselfähigkeit und gute Thermostabilität erhalten.

Gegenstand der vorliegenden Erfindung ist die Verwendung von Einschluß-Verbindungen, bestehend aus einer Wirt-Verbindung, die ein ringförmig verknüpftes Polysaccharid mit 3 bis 100 monomeren Saccharideinheiten ist und in ihrem molekularen Grundgerüst einen Hohlraum bildet, sowie aus einer oder mehreren in diesen Hohlraum als Gast-Verbindung eingeschlossenen chemischen Verbindung(en), als Ladungssteuermittel und Aufladungsverbesserer in elektrophotographischen Tonern und Entwicklern, in triboelektrisch oder elektrokinetisch versprühbaren Pulvern und Pulverlacken und in Elektretmaterialien.

Bevorzugt als Wirt-Verbindung im Sinne der vorliegenden Erfindung sind 1,4-verknüpfte Pyranosen der Formel (I) 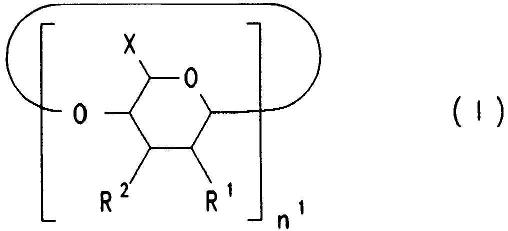 und 1,6-verknüpften Pyranosen der Formel (II) 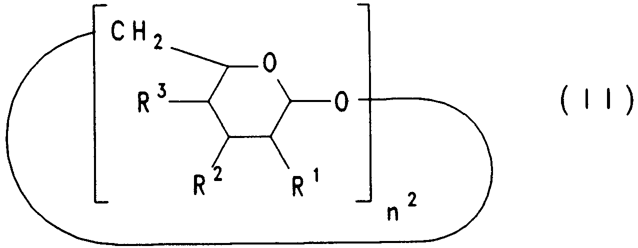 worin
- n¹: eine Zahl von 6 bis 100, vorzugsweise 6 bis 80, besonders bevorzugt 6 bis 60,
- n²: eine Zahl von 3 bis 130, vorzugsweise 3 bis 60,
- R¹, R² und R³: unabhängig voneinander gleich oder verschieden sind und die Bedeutung Hydroxy; verzweigtes oder unverzweigtes, cyclisches oder offenkettiges C₁-C₃₀-Alkoxy; verzweigtes oder unverzweigtes, cyclisches oder offenkettiges C₂-C₃₀-Alkenoxy, vorzugsweise Vinyloxy oder Allyloxy, wobei die genannten Alkoxy- und Alkenoxy-Reste teilweise oder vollständig fluoriert sein können; unsubstituiertes -O-Aryl(C₆-C₃₀), vorzugsweise -O-phenyl, mit 1 bis 5 C₁-C₃₀-Alkylresten oder C₁-C₃₀-Alkoxyresten substituiertes -O-Aryl(C₆-C₃₀); -O-(C₁-C₄)-Alkyl(C₆-C₃₀)aryl; -O-C₆₀-C₇₀-Fulleren; -O-(Alkylen(C₀-C₃₀)-Y-Alkyl(C₁-C₃₀))x, -O-(Aryl(C₆-C₃₀)-Y-Aryl(C₆-C₃₀))ₓ, -O-(Aryl(C₆-C₃₀)-YAlkyl(C₁-C₃₀))ₓ, -O-(Alkylen(C₀-C₃₀)-Y-Aryl(C₆-C₃₀)-alkyl(C₀-C₄))ₓ, wobei x die Bedeutung 1 bis 30, vorzugsweise 1 bis 2, hat und Y eine chemische Bindung, O, S, SO, SO₂, PR⁴, PR⁴₃, Si, SiR₂⁴ oder NR⁴ bedeutet sowie die Reste R⁴ die Bedeutung Wasserstoff, C₁-C₄-Alkyl oder C₁-C₄-Alkoxy haben, vorzugsweise ein Polyoxyethylen- oder/und Polyoxypropylen-Rest der Formel -O-(C₂-C₃-alkylen-O)ₓ-R⁵, worin R⁵ Wasserstoff, C₁-C₄-Alkyl, Acetyl, Benzoyl oder Naphthoyl bedeutet; eines -O-COR⁶-Restes, wobei R⁶ OH, gesättigtes oder ungesättigtes, verzweigtes oder unverzweigtes, cyclisches oder offenkettiges C₁-C₁₈-Alkyl, teilfluoriertes oder perfluoriertes (C₁-C₁₈)-Alkyl, Phenyl, C₁-C₁₈-Alkyl-phenyl, vorzugsweise Benzyl oder Tolyl; einen -O-PR⁷₂-Rest oder -O-PR⁷₄-Rest, wobei R⁷ die Bedeutung Wasserstoff, Methyl, Ethyl, Propyl, Butyl, Vinyl, Allyl, Isopropyl, Isobutyl, Neopentyl, tert.-Butyl, Cyclohexyl, Cyclopentyl, Phenyl, Tolyl, Benzyl, teilfluoriertes oder perfluoriertes Alkyl-(C₁-C₁₈), sowie O, OH, S und NR⁸₂, worin R⁸ Wasserstoff, C₁-C₈-Alkyl oder Phenyl ist, insbesondere PO(OH)₂ oder PO-(O-C₆H₅)₂ bedeutet; den Rest -O-SO₂R⁹ bedeutet, in dem R⁹ die Bedeutung Methyl, Ethyl, Propyl, Butyl, Vinyl, Allyl, Isopropyl, Isobutyl, Neopentyl, tert.-Butyl, Cyclohexyl, Cyclopentyl, Phenyl, Tolyl, Benzyl,teilfluoriertes oder perfluoriertes Alkyl-(C₁-C₁₈), O, OR⁸, S oder NR⁸₂ hat;
den Rest -O-SiR¹⁰₃ bedeutet, in dem R¹⁰ die Bedeutung Methyl, Ethyl, Propyl, Butyl, Vinyl, Allyl, Isopropyl, Isobutyl, Neopentyl, tert.-Butyl, Cyclohexyl, Cyclopentyl, Phenyl, Tolyl, teilfluoriertes oder perfluoriertes Alkyl(C₁-C₁₈), O, OR⁸, S oder NR⁸₂ hat;
den Rest -O-BR¹¹₂ bedeutet, in dem R¹¹ die Bedeutung Methyl, Ethyl, Propyl, Butyl, Vinyl, Allyl, Isopropyl, Isobutyl, Neopentyl, tert.-Butyl, Cyclohexyl, Cyclopentyl, Phenyl, Tolyl, teilfluoriertes oder perfluoriertes Alkyl(C₁-C₁₈), O, OH, OR⁸, S oder NR⁸₂ hat;
einen Amino-Rest der Formel -NH₂, -NHR¹² oder -NR¹²₂ bedeutet, wobei R¹² gleiche oder verschiedene Reste eines C₁-C₃₀-aliphatischen, C₇-C₆₀-araliphatischen oder C₆-C₃₀-aromatischen Kohlenwasserstoffs, der durch ein bis 3 Heteroatome N, O oder/und S unterbrochen sein kann; ein Alkyl(C₁-C₁₈), das perfluoriert oder teilfluoriert ist;
oder worin das N-Atom des Amino-Restes Bestandteil eines gesättigten oder ungesättigten, aromatischen oder nichtaromatischen 5- bis 7-gliedrigen Ringsystems ist, vorzugsweise das Piperidinyl- oder Pyridinium-Ringsystem, das weitere Heteroatome, bevorzugt Stickstoff, Sauerstoff, Schwefel oder eine Kombination davon, im Ring enthalten kann, insbesondere das Morpholinium-Ringsystem, und durch Ankondensation (Annellierung) von oder Verbrückung zu weiteren Ringsystemen modifiziert sein kann, wie insbesondere das Chinolinium-Ringsystem;
oder eines Ammonium-Restes -NR¹²₄ ⁺ A⁻, wobei A- ein anorganisches oder organisches Anion bedeutet;
oder einen Azid-Rest -N₃ bedeutet;
oder worin die Reste R¹ und R², oder R² und R³ gemeinsam ein Ringsystem der Formel 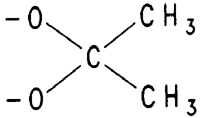 bilden;
und
- X: die Bedeutung -CH₂R¹, -CH₂-NO₂, -CH₂-Hal, wobei Hal Halogen bedeutet, vorzugsweise -CH₂OH, -CH₂OCH₃, -CH₂OCO(C₁-C₄)alkyl, -CH₂-O-SiR₃⁴, -CH₂-O-trityl, -COOH, -COO(C₁-C₄)alkyl, -CH₂-O-SO₂-(C₁-C₄)-alkyl oder -CH₂-O-SO₂-C₆H₄-(C₁-C₄)-alkyl, hat.

Neben den genannten Pyranosen kommen auch die entsprechenden Furanosen sowie Gemische aus Pyranosen und Furanosen in Betracht.

Als Gast-Verbindungen, die von den besagten ringförmig verknüpften Polysacchariden eingeschlossen werden, kommen alle chemischen Verbindungen und Ionen in Betracht, die aufgrund ihrer Molekülgeometrie dazu in der Lage sind, wie organische und anorganische Verbindungen, metallorganische Verbindungen, Metallkationen, anorganische oder organische Anionen und Betaine.

Voraussetzung zur Ausbildung der Einschlußverbindung ist, daß die Gast-Verbindung eine geeignete Größe aufweist, um sich in den Hohlraum einzulagern oder "anzudocken". So weisen beispielsweise die nachstehend genannten Wirte 1 bis 3 folgende Außen- und Innendurchmesser auf:

| | | |
|---|---|---|
| Wirt 1: | Außendurchmesser | 14,6 Å |
| | Innendurchmesser | 4,9 Å |
| Wirt 2: | Außendurchmesser | 15,4 Å |
| | Innendurchmesser | 6,2 Å |
| Wirt 3: | Außendurchmesser | 17,5 Å |
| | Innendurchmesser | 7,9 Å |

Zur Ausbildung einer Einschluß-Verbindung sollte die Gast-Verbindung daher nicht größer als der Außendurchmesser des Wirtes sein.
Weiterhin besteht die Möglichkeit, daß Molekülteile, z.B. Substituenten, wie Alkylgruppen, sich als Anker in den Hohlraum einlagern und damit den Gast an den Wirt binden.
Es ist daher entweder eine vollständige Einlagerung der Gastverbindung oder eine Einlagerung sterisch geeigneter Molekülteile, wie Substituenten, zur Ausbildung einer Einschluß-Verbindung im Sinne der vorliegenden Erfindung möglich.

Eine schematische Darstellung der räumlichen Gestalt der erfindungsgemäß eingesetzten Einschluß-Verbindungen ist in den Formeln (IV) und (V) wiedergegeben, worin der stumpfe Kegel ein ringförmig verknüpftes Polysaccharid, wie beispielsweise in Formel (IV) dargestellt, 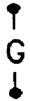 die Gast-Verbindung und [G]^{+/-} ein Gast-Ion bedeuten.

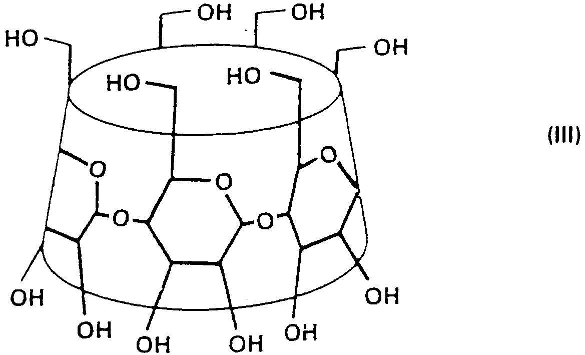

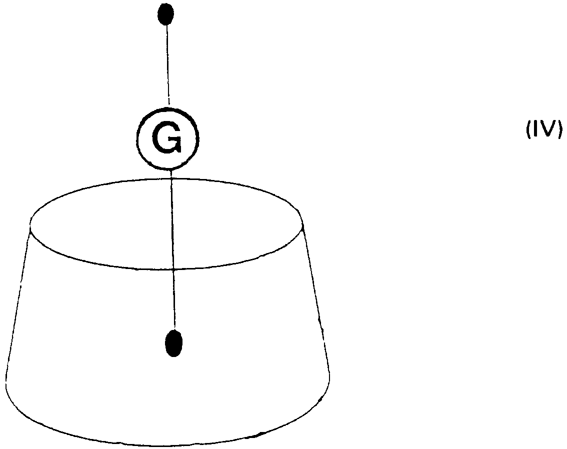

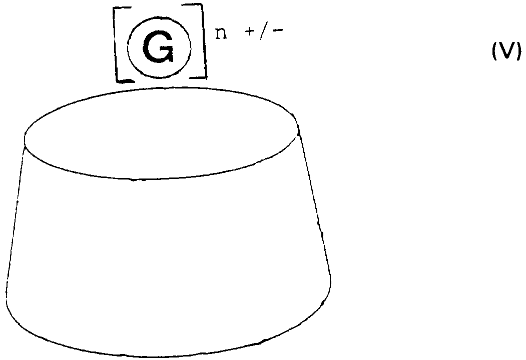

Von besonderem Interesse im Sinne der vorliegenden Erfindung sind Wirt-Verbindungen der Formeln (I) oder (II), worin
- R¹, R² und R³: unabhängig voneinander die Bedeutung Hydroxy, Methoxy, Ethoxy, Propyloxy, iso- Propyloxy, n-Butyloxy, iso-Butyloxy, tert.-Butyloxy, Vinyloxy, Allyloxy, Phenoxy, Benzyloxy, -O-CF₃, -O-(CH₂CH₂-O)ₓ-R⁵, -O-COR¹³, worin R¹³ ein C₁-C₈-Alkyl, Phenyl oder C₁-C₈-Alkyl-phenyl ist;
oder eine Aminogruppe -NR¹⁴R¹⁵, worin R¹⁴ und R¹⁵ unabhängig voneinander Wasserstoff, Methyl, Ethyl, n-Propyl, iso-Propyl, n-Butyl, iso-Butyl, tert.-Butyl, Allyl, Vinyl, Phenyl, Benzyl oder Tolyl ist oder worin das N-Atom Bestandteil eines Piperidinyl-, Morpholinyl-, Pyridinium- oder Chinolinium-Ringsystems ist;
oder eine Aminogruppe -N^{⊕}HR¹⁴R¹⁵A'^{Θ}, worin A'^{Θ} ein Borat-, Sulfat-, Chlorid-, Bromid-, Nitrat-, Cyanid-, Phosphat-, Carbonat-, Acetat- oder Alkoholat-Anion, und
- X: die Bedeutung -CH₂OH, -CH₂OCH₃, -CH₂Cl, -CH₂Br, -COOH, -COOCH₃, -CH₂-O-C(C₆H₅)₃, -CH₂-O-Si(CH₃)₃, -CH₂-O-SO₂-CH₃ oder -CH₂-O-SO₂-C₆H₄CH₃ hat.

Von besonderem Interesse sind als Gast-Moleküle oder Gast-Ionen G:
Alkohole, verzweigt oder unverzweigt, gesättigt oder ungesättigt, substituiert oder unsubstituiert, aromatisch oder aliphatisch, cyclisch oder geradkettig;
Ketone, verzweigt oder unverzweigt, gesättigt oder ungesättigt, substituiert oder unsubstituiert, aromatisch oder aliphatisch, cyclisch oder geradkettig;
Aldehyde, verzweigt oder unverzweigt, gesättigt oder ungesättigt, substituiert oder unsubstituiert, aromatisch oder aliphatisch, cyclisch oder geradkettig;
Carbonsäuren, verzweigt oder unverzweigt, gesättigt oder ungesättigt, substituiert oder unsubstituiert, aromatisch oder aliphatisch, cyclisch oder geradkettig;
Polyalkohole, verzweigt oder unverzweigt, gesättigt oder ungesättigt, substituiert oder unsubstituiert, aromatisch oder aliphatisch, cyclisch oder geradkettig;
Chinone, substituiert oder unsubstituiert;
Zucker, verzweigt oder unverzweigt, gesättigt oder ungesättigt, substituiert oder unsubstituiert;
Ether, verzweigt oder unverzweigt, gesättigt oder ungesättigt, substituiert oder unsubstituiert, aromatisch oder aliphatisch, cyclisch oder geradkettig;
Mercaptane, verzweigt oder unverzweigt, gesättigt oder ungesättigt, substituiert oder unsubstituiert, aromatisch oder aliphatisch, cyclisch oder geradkettig;
Cyano-Verbindungen, verzweigt oder unverzweigt, gesättigt oder ungesättigt, substituiert oder unsubstituiert, aromatisch oder aliphatisch, cyclisch oder geradkettig;
aromatische oder aliphatische Nitroverbindungen;
primäre, sekundäre oder tertiäre Amine NR₃, wobei R die Bedeutung von H, OH, Halogen oder eines Kohlenwasserstoff-Rests hat, der verzweigt oder unverzweigt, gesättigt oder ungesättigt, substituiert oder unsubstituiert, aromatisch oder aliphatisch, cyclisch oder geradkettig ist;
metallorganische Verbindungen, beispielsweise Ferrocen oder Metallalkyle;
Borverbindungen BR₃ und BR₄⁻, wobei R wie vorstehend definiert ist;
Siliciumverbindungen SiR₄, wobei R wie vorstehend definiert ist;
Phosphorverbindungen PR'₃, PR'₅ oder PR'₆, wobei R' die Bedeutung von H, O, S, OH, Halogen oder eines organischen Rests hat;
Schwefelverbindungen SR'₂, SR'₃, -SO₃-, SR'₄, wobei R' wie vorstehend definiert ist;
Ammonium-Verbindungen NR₄⁺, wobei R wie vorstehend definiert ist; anorganische Kationen, beispielsweise einwertige, zweiwertige, dreiwertige oder vierwertige Metallkationen;
ein- oder zweiwertige organische Anionen, wie Carboxylat, Phenolat, Mercaptat oder Alkoholat; oder anorganische Anionen oder Salze aus einem der genannten organischen oder anorganischen Anionen mit einem der genannten Kationen.

Beispiele für Alkohole als Gast-Moleküle im Sinne der erfindungsgemäßen Verwendung sind C₁-C₃₀-aliphatische, C₂-C₃₀-olefinisch ungesättigte und C₃-C₃₀-cycloaliphatische Alkohole, wie Methanol, Ethanol, n- und iso-Propanol, n-, iso- und tert.-Butanol, Pentanole, Hexanole oder Cyclohexanol.

Beispiele für Ketone als Gast-Moleküle im Sinne der erfindungsgemäßen Verwendung sind C₃-C₃₀-aliphatische, C₄-C₃₀-olefinisch ungesättigte, C₄-C₃₀-cycloaliphatische und C₈-C₃₀-aromatische Ketone, wie Aceton, Butanon, Acetophenon, Benzophenon, Benzalaceton, Indanon, Indandion, Acetylaceton, Cyclopentanon, Cyclohexanon, Fluorenon, Xanthon, Benzil, Pinakolon, Brenztraubensäure, Phenylaceton, Campher, Decanon, Hexafluoraceton, Tropolon und Hydrindantin.

Beispiele für Aldehyde als Gast-Moleküle im Sinne der erfindungsgemäßen Verwendung sind C₁-C₃₀-aliphatische, C₃-C₃₀-olefinisch ungesättigte, C₄-C₃₀-cycloaliphatische und C₇-C₃₀-aromatische Aldehyde, wie Formaldehyd, Acetaldehyd, Propionaldehyd, Benzaldehyd, Acrolein, Butyraldehyd, Isobutyraldehyd, Glyoxal, Crotonaldehyd, Salicylaldehyd, Anisaldehyd und Zimtaldehyd.

Beispiele für Carbonsäuren als Gast-Moleküle im Sinne der erfindungsgemäßen Verwendung sind C₁-C₃₀-aliphatische, C₃-C₃₀-olefinisch ungesättigte, C₄-C₃₀-cycloaliphatische und C₇-C₃₀-aromatische Carbonsäuren; C₂-C₃₀-aliphatische, C₄-C₃₀-olefinisch ungesättigte und C₈-C₃₀-aromatische Dicarbonsäuren sowie Tricarbonsäuren; beispielsweise Ameisensäure, Essigsäure, Propionsäure, Buttersäure, Valeriansäure, Capronsäure; Fettsäuren, wie Ölsäure, Stearinsäure, Laurinsäure, Palmitinsäure; Oxalsäure, Malonsäure, Bernsteinsäure, Glutarsäure, Adipinsäure, Maleinsäure, Fumarsäure, Äpfelsäure, Weinsäure, Citronensäure, Milchsäure, Benzoesäure, Salicylsäure, Phthalsäure, Terephthalsäure, Isophthalsäure, Gallussäure, Digallussäure, Ascorbinsäure, Gluconsäure und Anissäure.

Beispiele für Polyalkohole als Gast-Moleküle im Sinne der erfindungsgemäßen Verwendung sind C₂-C₃₀-aliphatische, C₃-C₃₀-olefinisch ungesättigte, C₃-C₃₀-cycloaliphatische und C₆-C₃₀-aromatische Polyalkohole mit 2 bis 10 OH-Gruppen, wie Ethylenglykol, Propylenglykol, Butylenglykol, Hexylenglykol, Cyclohexandiol, Glycerin, Adonit, Mono-, Di- und Tripentaerythrit, Mannit und Sorbit.

Beispiele für Phenole als Gast-Moleküle im Sinne der erfindungsgemäßen Verwendung sind C₆-C₃₀-Hydroxyaromaten, die weitere Substituenten haben können, wie Phenol, Naphthol, Resorcin, Kresol, Hydrochinone, Pikrinsäure, Pyrogallol und Phloroglucin.

Beispiele für Chinone als Gast-Moleküle im Sinne der erfindungsgemäßen Verwendung sind solche mit 6 bis 30 Kohlenstoffatomen, beispielsweise Benzochinon, Naphthochinon, Anthrachinon, Alizarin, Phenanthrenchinon und Acenaphthenchinon.

Beispiele für Zucker als Gast-Moleküle im Sinne der erfindungsgemäßen Verwendung sind Mono- oder Disaccharide, wie Glucose, Fructose, Rhamnose, Galaktose, Lactose, Saccharose, Mannose, Xylose, Allose, Arabinose und Polysaccharide wie Cellobiose, Stärke oder Sorbose.

Beispiele für Ether als Gast-Moleküle im Sinne der erfindungsgemäßen Verwendung sind C₂-C₃₀-aliphatische, C₃-C₃₀-olefinisch ungesättigte, C₄-C₃₀-cycloaliphatische, C₇-C₃₀-araliphatische und aromatische Ether, wie Diethylether, Benzylether, Furan, Dioxan, Dibutylether, Diglycol, Dimethoxyethan und Diphenylether sowie Polyether mit 3 bis 100 Ethoxy- und/oder Propoxy-Einheiten.

Beispiele für Mercaptane als Gast-Moleküle im Sinne der erfindungsgemäßen Verwendung sind Methyl-, Äthyl-, Propyl-, iso-, n-, tert-Butylmercaptan, Amylmercaptan, Hexylmercaptan, Benzylmercaptan, Phenylmercaptan und Thiokresol.

Beispiele für Cyanoverbindungen als Gast-Moleküle im Sinne der erfindungsgemäßen Verwendung sind Acetonitril, Benzonitril, Malodinitril, Cyanessigsäure, Propionitril, Capronitril, Dodecylcyanid, Succinonitril und Glutaronitril.

Beispiele für Nitroverbindungen als Gast-Moleküle im Sinne der erfindungsgemäßen Verwendung sind Nitromethan, Nitroethan, Nitrobenzol, Mono-, Di- und Tri-Nitrotoluol, Nitrophenol und Nitroanilin.

Beispiele für primäre, sekundäre und tertiäre Amine als Gast-Moleküle im Sinne der erfindungsgemäßen Verwendung sind Ammoniak, Mono-(C₁-C₁₈)-alkyl-, Di-(C₁-C₁₈)-alkyl-, Tri-(C₁-C₁₈)-alkyl-amine, wobei die besagten Alkylreste auch ein- oder mehrfach olefinisch ungesättigt oder mit OH, NH₂ oder Alkoxy substituiert sein können, Anilin, Allylamin, Mono-, Di-, Tri-Methylamin, Mono-, Di-, Tri-Ethylamin, Di- und Tri-Phenylamin, Benzylamin, Toluidin, Anisidin, Phenylendiamin, Benzidin, Urotropin, Acridin, Pyrrolidin, Piperidin, Morpholin, Indol, Piperazin, Pyridin, Picolin, Chinolin, Isochinolin, Pyrimidin, sowie Aminosäuren.

Beispiele für Siliciumverbindungen als Gast-Moleküle im Sinne der erfindungsgemäßen Verwendung sind Tetramethylsilan, Tetraethylsilan, Tetrapropylsilan, Tetrabutylsilan, Tetraphenylsilan, Trimethylsilylether und Siloxane.

Beispiele für Schwefelverbindungen als Gast-Moleküle im Sinne der erfindungsgemäßen Verwendung sind Dithiocarbonsäuren, Diphenylsulfide, Benzolsulfonsäure, Toluolsulfonsäure, Dimethylsulfoxid, Sulfanilsäure, Sulfanilsäureamid, Naphthalinsulfonsäure, Phenylsulfonsäure, Sulfolan, Thiiran und Thiophen.

Beispiele für Phosphorverbindungen als Gast-Moleküle im Sinne der erfindungsgemäßen Verwendung sind Triethylphosphat, Triphenylphosphat, Triphenylphosphinoxid, Hexamethylphosphorsäuretriamid und Diethylphosphit.

Beispiele für Ammoniumverbindungen als Gast-Ionen im Sinne der erfindungsgemäßen Verwendung sind Ammonium, Tetramethyl-, Tetraethyl-, Tetrapropyl-, Tetrabutyl- und Tetraphenylammonium, Diallyldimethylammonium, Pyridinium, Cetylpyridinium, Fluoralkyl(C₁-C₁₈)ammonium und Anilinium.

Beispiele für anorganische Kationen als Gast-Ionen im Sinne der erfindungsgemäßen Verwendung sind Li⁺, Na⁺, K⁺, Rb⁺, Cs⁺, Mg²⁺, Ca²⁺, Sr²⁺, Ba²⁺, Ti²⁺, Ti⁴⁺, Zr²⁺, Zr⁴⁺, V³⁺, V⁵⁺, Cr³⁺, Cr⁶⁺, Mn²⁺, Mo⁴⁺, Fe²⁺, Fe³⁺, Co²⁺, Ni²⁺, Cu⁺, Cu²⁺, Zn²⁺, Al³⁺, wobei die genannten Metallkationen auch in anderen als den angegebenen Oxidationsstufen vorliegen können. Weiterhin können die anorganischen Kationen neutrale oder anionische Liganden tragen, wie z.B. H₂O, CO, CN⁻, NH₃, OH⁻, O²⁻, Cl⁻, F⁻, Br^{Θ} und I^{Θ}.

Beispiele für anorganische Anionen als Gast-Ionen im Sinne der erfindungsgemäßen Verwendung sind NO₃-, OH⁻, HSO₄⁻, SO₄²⁻, HSO₃⁻, S₂^{-,} S²⁻, SO₃²⁻, S₂O₃²⁻, HCO₃⁻, CO₃²⁻, H₂PO₄⁻, HPO₄²⁻, PO₄³⁻, CN⁻, CF₃SO₃⁻, CF₃COO⁻, Cyanat, Isocyanat, F⁻, Cl⁻, Br⁻, J⁻, Thiocyanat, Zinktetracyanat, Zinktetrathiocyanat, Perchlorat, PF₆⁻, Molybdate, wie MoO²⁻, Thiomolybdate, wie MoS₄²⁻ und Wolframate, wie WO²⁻, sowie Anionen von Heteropolysäuren, wie Molybdatophosphate, z.B. P(Mo₃O₁₀)₄³⁻, Wolframatophosphate, z.B. P(W₃O₁₀)₄³⁻, und Silicomolybdate und SiF₆²⁻.

Beispiele für Borverbindungen als Gast-Ionen im Sinne der erfindungsgemäßen Verwendung sind Tetrafluoroborat, Tetrachloroborat, Tetraphenylborat, Tetra(fluorphenyl)borat, Tetra(chlorphenyl)borat, Tetratolylborat, Tetranaphthylborat, Tetra(methoxyphenyl)borat, Tetrabiphenylborat, Tetrabenzylborat, Tetra(perfluoroalkyl)phenylborat und Tetrapyridylborat, wobei die genannten aromatischen Reste in ortho-, meta- oder para-Position mit dem Boratom verbunden sein können.

Beispiele für organische Anionen als Gast-Ionen im Sinne der erfindungsgemäßen Verwendung sind Ethylsulfat, Thiolat, Phenolat, Nitrophenolat, gesättigtes oder ungesättigtes aliphatisches oder cycloaliphatisches oder aromatisches Carboxylat oder Sulfonat, vorzugsweise Formiat, Lactat, Tartrat, Benzoat, das Mono- oder Dianion der Dithiodibenzoesäure, 4,4'-Sulfonyldibenzoat, Phthalat, Terephthalat, Isophthalat, Sulfoisophthalat, Salicylat, 2-Hydroxy-3-naphthoat, 2-Hydroxy-6-naphthoat, Ethylsulfonat, Mono- oder Dimethylsulfat, Phenylsulfonat oder Tosylat, ferner perfluoriertes gesättigtes oder ungesättigtes aliphatisches oder cycloaliphatisches oder aromatisches Carboxylat oder Sulfonat, vorzugsweise Perfluoracetat, Perfluor(C₁-C₃₀)-alkylbenzoat, Perfluorethylsulfonat oder Perfluor(C₁-C₃₀)-alkylbenzolsulfonat, sowie gesättigtes oder ungesättigtes aliphatisches oder cycloaliphatisches oder aromatisches Di- und Tricarboxylat oder Di- und Trisulfonat, vorzugsweise Citrat, Oxalat und Succinat, chloriertes oder fluoriertes aliphatisches, cycloaliphatisches oder aromatisches Carboxylat, wie Trifluoracetat, und Trifluorsulfonat.

Beispiele für Betaine als Gast-Moleküle im Sinne der erfindungsgemäßen Verwendung sind Disulfo-pyrrolidiniumbetaine der allgemeinen Formel (VI) 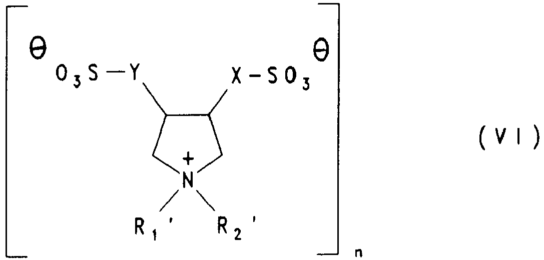 worin
- R₁' und R₂': Wasserstoff, Alkyl(C₁-C₅)- oder Alkoxy(C₁-C₅)-Reste, Polyoxalkylen-Reste, bevorzugt Polyoxethylen- oder Polyoxpropylen-Reste, der allgemeinen Formel (Alkylen(C₁-C₅)-O)n-R bedeuten, worin R ein Wasserstoffatom oder einen Alkyl(C₁-C₄)-Rest bedeutet und n eine Zahl von 1 bis 10 ist, und X und Y jeweils Alkylen(C₁-C₅) bedeuten.

Die ringförmig verknüpften Polysaccharide (Wirt-Verbindungen) können aus jeweils gleichen oder unterschiedlichen monomeren Zuckereinheiten bestehen, wobei die Unterschiede in der Konstitution als auch in der Konfiguration bestehen können. Insbesondere können solche monomeren Zuckerbausteine im Oligo- oder Polysaccharid enthalten sein, die zueinander enantiomer oder diastereomer sind.

Bevorzugt im Sinne der vorliegenden Erfindung als Wirt-Verbindung sind ringförmig verknüpfte Polysaccharide, die aus jeweils gleichen oder enantiomeren Saccharid-Einheiten oder aus Enantiomeren-Mischungen dieser Einheiten (Racemat) bestehen, wobei die Reste R¹, R², R³ und X in allen besagten Saccharid-Einheiten jeweils gleiche Bedeutung haben.

Weiterhin von Interesse sind Mischungen oder Mischkristalle von verschiedenen ringförmig verknüpften Polysacchariden sowie Mischungen von verschiedenen ringförmig verknüpften Polysaccharid-Enantiomeren und -Racematen. Diese können mit gleichen oder verschiedenen Gast-Molekülen G zu den entsprechenden Einschluß-Verbindungen umgesetzt werden.

Weiterhin von Interesse sind Mischungen oder Mischkristalle von Einschluß-Verbindungen mit gleichen oder verschiedenen Gast-Molekülen G oder Gast-Ionen.

Besonders bevorzugt im Sinne der vorliegenden Erfindung sind 1,4-verknüpfte Oligoglucoside oder Oligolactoside mit 6 bis 8 monomeren Einheiten, worin R¹, R² und R³ jeweils OH, OCH₃, OC₂H₅, OC₃H₇, O-n-butyl, O-iso-butyl, O-tert.-butyl, O-mesyl oder O-tosyl und X die Bedeutung -CH₂OH, -CH₂OCH₃, -CH₂O-Tosyl oder -CH₂O-mesyl hat.

Cyclisch verknüpfte Oligoglucoside werden in der Literatur als Cyclodextrine bezeichnet. Die Bezeichnung Alpha-, Beta-, Gamma-Cyclodextrin richtet sich nach der Anzahl der ringförmig verknüpften Saccharid-Monomere. Ein ringförmig 1,4-verknüpftes Oligosaccharid, bestehend aus 6 Saccharid-Monomeren (n¹ = 6) wird Alpha-Cyclodextrin, aus 7 Saccharid-Monomeren (n¹ = 7) Beta-Cyclodextrin und aus 8 Saccharid-Monomeren (n¹ = 8) Gamma-Cyclodextrin genannt. Für die höheren Homologen erfolgt die Nomenklatur entsprechend fortlaufend dem griechischen Alphabet. 1,4-verknüpfte Homologe mit n < 6 sind nicht bekannt, da aus sterischen Gründen eine Cyclisierung nicht möglich ist, wohl aber 1,6-verknüpfte Homologe mit n² = 3, 4 und 5.

Von ganz besonderem Interesse als Wirt-Verbindungen sind folgende 1,4-verknüpften Cyclodextrin der Formel (I):

| | |
|---|---|
| Wirt 1: | R¹ und R² sind OH, X ist CH₂OH, n¹ ist 6; |
| Wirt 2: | R¹ und R² sind OH, X ist CH₂OH, n¹ ist 7; |
| Wirt 3: | R¹ und R² sind OH, X ist CH₂OH, n¹ ist 8; |

die mit den nachstehenden Gast-Verbindungen G in ihrer dissoziierten oder undissoziierten Form Einschluß-Verbindungen der Formel (IV) oder (V) bilden:

| | |
|---|---|
| Verbindung 4: | Wirt 3 + G = LiCl |
| Verbindung 5: | Wirt 3 + G = ZnCl₂ |
| Verbindung 6: | Wirt 3 + G = SrCl₂ |
| Verbindung 7: | Wirt 2 + G = Octadecyl-3-(3,5-di-tert.-butyl-4-hydroxyphenyl)-propionat |
| Verbindung 8: | Wirt 3 + G = Na₂CO₃ |
| Verbindung 9: | Wirt 2 + G = NaBF₄ |
| Verbindung 10: | Wirt 2 + G = Zn(NO₃)₂ |
| Verbindung 11: | Wirt 3 + G = Dimethyldiallylammoniumchlorid |
| Verbindung 12: | Wirt 3 + G = CdCl₂ |
| Verbindung 13: | Wirt 3 + G = FeSO₄ |
| Verbindung 14: | Wirt 2 + G = Dimethyldiallylammoniumchlorid |
| Verbindung 15: | Wirt 1 + G = Zn(NO₃)₂ |
| Verbindung 16: | Wirt 1 + G = Oxalsäure |
| Verbindung 17: | Wirt 2 + G = NaB(C₆H₅)₄ |
| Verbindung 18: | Wirt 2 + G = KNO₃ |
| Verbindung 19: | Wirt 3 + G = Al(NO₃)₃ |
| Verbindung 20: | Wirt 1 + G = Cocosalkyldimethylbenzylammoniumchlorid |
| Verbindung 21: | Wirt 3 + G = CoCl₂ |
| Verbindung 22: | Wirt 1 + G = Salicylsäure |
| Verbindung 23: | Wirt 1 + G = Stearinsäure |
| Verbindung 24: | Wirt 3 + G = MnSO₄ |
| Verbindung 25: | Wirt 2 + G = Triphenylamin |
| Verbindung 26: | Wirt 2 + G = Na-trifluormethansulfonat |
| Verbindung 27: | Wirt 2 + G = CH₃COONa |
| Verbindung 28: | Wirt 2 + G = p-Benzochinon |
| Verbindung 29: | Wirt 2 + G = Anthracen |
| Verbindung 30: | Wirt 2 + G = 2,5-Di-tert.-butyl-hydrochinon |
| Verbindung 31: | Wirt 2 + G = Triethylamin |
| Verbindung 32: | Wirt 2 + G = Tetramethylphosphoniumchlorid |
| Verbindung 33: | Wirt 2 + G = Ferrocen |
| Verbindung 34: | Wirt 2 + G = KPF₆ |
| Verbindung 35: | Wirt 3 + G = K₂MoO₄ |
| Verbindung 36: | Wirt 2 + G = Ascorbinsäure |
| Verbindung 37: | Wirt 2 + G = K-Sorbat |
| Verbindung 38: | Wirt 2 + G = Gluconsäure |
| Verbindung 39: | Wirt 2 + G = DL-Äpfelsäure |
| Verbindung 40: | Wirt 2 + G = Tripentaerythrit |
| Verbindung 41: | Wirt 2 + G = Adonit |
| Verbindung 42: | Wirt 2 + G = Hydrindantin |
| Verbindung 43: | Wirt 2 + G = Ca(NO₃)₂ |
| Verbindung 44: | Wirt 3 + G = Ca(NO₃)₂ |
| Verbindung 45: | Wirt 3 + G = CaSO₄ |
| Verbindung 46: | Wirt 3 + G = ZrOCl₂ |
| Verbindung 47: | Wirt 3 + G = Zn(NO₃)₂ |
| Verbindung 48: | Wirt 1 + G = Al(NO₃)₃ |
| Verbindung 49: | Wirt 2 + G = Al(NO₃)₃ |
| Verbindung 50: | Wirt 1 + G = Propionsäure |
| Verbindung 51: | Wirt 2 + G = Bis[3,3-bis-4'-hydroxy-3'-tert.-butylphenyl)-butansäure]-glykolester |
| Verbindung 52: | Wirt 2 + G = Pentaerythrityl-tetrakis-[3,5-di-tert.-butyl-4-hydroxyphenyl-propionat] |
| Verbindung 53: | Wirt 3 + G = MnCl₂ |
| Verbindung 54: | Wirt 2 + G = β,β'-Thio-di(propionsäure-laurylester) |
| Verbindung 55: | Wirt 2 + G = β,β'-Thio-di(propionsäure-stearylester) |
| Verbindung 56: | Wirt 2 + G = Di-octadecyl-disulfid |
| Verbindung 57: | Wirt 2 + G = Tris-(2,4-di.-tert.-butylphenyl)phosphit |
| Verbindung 58: | Wirt 1 + G = C₁₂/C₁₄-Alkyltrimethylammonium-Cl |
| Verbindung 59: | Wirt 2 + G = C₁₂/C₁₄-Alkyltrimethylammonium-Cl |
| Verbindung 60: | Wirt 3 + G = C₁₂/C₁₄-Alkyltrimethylammonium-Cl |
| Verbindung 61: | Wirt 1 + G = Benzoesäure |
| Verbindung 62: | Wirt 2 + G = Cocosalkyldimethylbenzylammonium-chlorid |
| Verbindung 63: | Wirt 3 + G = Cocosalkyldimethylbenzylammonium-chlorid |
| Verbindung 64: | Wirt 1 + G = Didecyldimethylammonium-chlorid |
| Verbindung 65: | Wirt 2 + G = Didecyldimethylammonium-chlorid |
| Verbindung 66: | Wirt 3 + G = Didecyldimethylammonium-chlorid |
| Verbindung 67: | Wirt 1 + G = Didecylmethylalkoxyammoniumpropionat |
| Verbindung 68: | Wirt 2 + G = Didecylmethylalkoxyammoniumpropionat |
| Verbindung 69: | Wirt 3 + G = Didecylmethylalkoxyammoniumpropionat |
| Verbindung 70: | Wirt 1 + G = Poly(diallyldimethylammoniumchlorid) |
| Verbindung 71: | Wirt 2 + G = Poly(diallyldimethylammoniumchlorid) |
| Verbindung 72: | Wirt 3 + G = Poly(diallyldimethylammoniumchlorid) |
| Verbindung 73: | Wirt 1 + G = Dimethyldiallylammoniumchlorid |
| Verbindung 74: | Wirt 3 + G = K₂CO₃ |
| Verbindung 75: | Wirt 3 + G = MgCl₂ |
| Verbindung 76: | Wirt 1 + G = N-(Trihydroperfluoralken)-N,N,N-trialkylammoniummethosulfat |
| Verbindung 77: | Wirt 2 + G = N-(Trihydroperfluoralken)-N,N,N-trialkylammoniummethosulfat |
| Verbindung 78: | Wirt 3 + G = N-(Trihydroperfluoralken)-N,N,N-trialkylammoniummethosulfat |
| Verbindung 79: | Wirt 2 + G = 2,4,5,2',3',4'-Hexahydroxybenzophenon |
| Verbindung 80: | Wirt 2 + G = 2,4,6-Trihydroxybenzoesäure |
| Verbindung 81: | Wirt 2 + G = 1,1,1-Trihydroxymethylethan |

sowie jeweils ihre Enantiomeren und Mischungen untereinander.

Die Herstellung der ringförmig verknüpften Polysaccharide ist in der Literatur vielfach beschrieben. (Beilstein "Handbuch der Organischen Chemie; Syst. Nr. 3011, 5. Erg. Werk Bd. 19/12; Angew. Chem. 92 (1980) 343, D. French, M.L. Levine, J.H. Pazur, E. Norberg J. Am. Chem. Soc. 71 (1949) 353.) In einer typischen Variante erfolgt die Synthese der ringförmigen Oligosaccharide durch Umsetzung von Stärke mit Kulturen des Bacillus macerans. Aus dem Gemisch können die einzelnen cyclischen Systeme durch fraktionierte Kristallisation oder mit chromatographischen Methoden aufgetrennt werden. Einzelne Derivate sind heute schon kommerziell erhältlich. Sie werden unter der Bezeichnung Alpha-, Beta-, Gamma-Cyclodextrin oder Schardinger-Dextrine vertrieben. Die verschieden substituierten Verbindungen werden typischerweise nach literaturbekannten Vorschriften aus den ringförmigen Oligosacchariden (X = CH₂OH und R¹/R² = OH) durch Derivatisierung mit geeigneten Reagenzien (Angew. Chem. 103 (1991) 94, Angew. Chem. 1994 (106), 851) hergestellt. Weitere Derivate und deren Herstellung sind in Chem. Ber. 102 (1969) 494-498, beschrieben. Neben der 1,4-Verknüpfung, wie in Formel (I) dargestellt, sind auch andere Ringverknüpfungen möglich (Angew. Chem. 1994, 106, S. 363), die auch kleinere Cyclen, z.B. n = 3, zulassen. Die Derivatisierung erfolgt hierbei im wesentlichen über die jeweiligen Monomerenbausteine vor der Cyclisierung.

Die Darstellung der Einschluß-Verbindungen ist literaturbekannt: M. L. Bender, M. Komiyama; Cyclodextrin Chemistry, Springer Verlag, Berlin 1978.
F. Cramer et al.; Die Naturwissenschaften 54 (1967) 625.
G. Wenz; Angew. Chem. 106 (1994) S. 851.
P. Klüfters et al.; Angew. Chem. 106 (1994) S. 1925.
W. Saenger; Angew. Chem. 92 (1980) S. 343.

Wasserlösliche Substanzen lassen sich beispielsweise direkt mit wäßrigen ringförmig verknüpften Polysaccharid-Lösungen in äquimolaren Mengen oder mehrfachem Überschuß in der Hitze oder Kälte unter Bildung der gewünschten Einschluß-Verbindung umsetzen.

Wasserunlösliche Verbindungen können in einem organischen Lösemittel gelöst werden und mit organischen oder wäßrigen Lösungen der ringförmig verknüpften Polysaccharide gerührt oder geschüttelt werden.

Es gelingt auch, derartige Einschluß-Verbindungen durch Kneten oder Flushen mit geeigneten Knetern, Extrudern oder Mischern herzustellen, indem die Komponenten angeteigt und intensiv vermischt werden.

Bei alkalischen Synthesebedingungen tritt eine vollständige oder teilweise Deprotonierung der OH-Gruppen des ringförmig verknüpften Polysaccharids ein. Mit Metall-Ionen bilden sich Metallpolyolate, bei denen die Alkoxid-O-Atome der Saccharide über Metall-Ionen verbrückt sind.

Die Bildung der Einschluß-Verbindung läßt sich durch Differentialthermoanalyse (DTA) nachweisen. Die Einschlußverbindung weist unterschiedliche Schmelz-/Zersetzungstemperaturen und Energien im Vergleich zur reinen Wirtkomponente auf.

Die ringförmig verknüpften Polysaccharide reagieren je nach Struktur unterschiedlich auf Einschlüsse. So können neben 1:1-Einlagerungen je nach Konzentration und Reaktionsbedingungen auch andere stöchiometrische Verhältnisse auftreten. Hierbei sind Kanal- oder Käfigstrukturen möglich, in deren Hohlräume die Komponenten G eingelagert sind.

Die erfindungsgemäßen Einschluß-Verbindungen sind überraschend vielfältig einsetzbare Ladungssteuermittel, die genau auf das jeweilige Harz/Toner-System abgestimmt werden können. Dies stellt einen großen Vorteil gegenüber den reinen Wirtverbindungen dar. Hierzu kommt, daß die erfindungsgemäß eingesetzten Verbindungen farblos sind und besonders hohe und konstante Ladungssteuereigenschaften, gute Thermo-Stabilitäten und sehr gute Dispergierbarkeiten besitzen. Ein großer technischer Vorteil dieser sehr gut dispergierbaren Verbindungen liegt darin, daß sie sich gegenüber den unterschiedlichen Bindemittelsystemen inert verhalten und somit vielfältig einsetzbar sind.

Neben ihrer Eignung in Tonern sind die erfindungsgemäßen Einschlußverbindungen als Ladungssteuermittel und Ladungsverbesserer auch in Pulvern und Lacken, insbesondere Pulverlacken, gut geeignet, insbesondere da sie die Gelzeit bei der thermischen Vernetzung der Pulverlacke ("Einbrennen") nicht nachteilig beeinflussen (beschleunigen).

Bei den erfindungsgemäßen Verbindungen sind die hohe Wirksamkeit, die ausgezeichnete Thermostabilität und die allgemeine Harzverträglichkeit von besonderem Vorteil. Für den technischen Einsatz besonders wichtig ist die sehr gute Dispergierbarkeit, so daß insgesamt eine hohe Effizienz erzielt werden kann. Es ist weiterhin von Vorteil, daß die Synthese der Einschluß-Verbindungen und die Dispergierung im Bindemittel in einem Arbeitsschritt durchgeführt werden können. Nach dem Anteigen der Vorprodukte können diese im Bindemittel-System mittels Kneter, Mischer, Extruder oder Walzenstühlen bei Temperaturen ab dem Erweichungspunkt dispergiert werden, wobei gleichzeitig die Synthese der Einschluß-Verbindungen stattfindet.

Dispergierung bedeutet die Verteilung eines Stoffes in einem anderen, im Sinne der Erfindung die Verteilung eines Ladungssteuermittels im Tonerbindemittel, Pulverlackbindemittel oder Elektretmaterial.

Je nach den stoffspezifischen Eigenschaften des Ladungssteuermittels, das kristallin, semi- oder teilkristallin oder röntgenamorph sein kann, bedeutet optimale und sehr gute Dispergierung eine homogene Verteilung des Ladungssteuermittels im jeweiligen Bindemittel.

So ist bekannt, daß kristalline Stoffe in ihrer gröbsten Form als Agglomerate vorliegen. Um eine homogene Verteilung im Bindemittel zu erreichen, müssen diese durch den Dispergiervorgang in kleinere Aggregate oder idealerweise in Primärteilchen zerteilt werden.

Die Ladungssteuermittel-Partikel, die nach der Dispergierung im Bindemittel vorliegen, sollten kleiner 1 µm, vorzugsweise kleiner 0,5 µm, sein, wobei eine enge Teilchengrößen-Verteilung von Vorteil ist.

Je nach Energieaufwand spricht man von leicht- bis schwerdispergierbaren Stoffen. Die Dispergierbarkeit ist eng mit den stoffspezifischen, chemisch/physikalischen Eigenschaften verknüpft. Bestimmend sind Konstitution;
Festkörper-Morphologie;
Modifikation/Kristallisation;
Korngröße und Verteilung;
Oberflächenbeschaffenheit und Form;
Nachbehandlung des Stoffes, z.B. Mahlung, Trocknung;
Finish oder Oberflächenbelegung.

Für die Dispergierung eines Ladungssteuermittels bedeutet leicht dispergierbar,
1. daß sich die Ladungssteuermittelteilchen durch mechanische Kräfte leicht zerteilen lassen (z.B. durch Extrudieren, Kneten),
2. daß die Ladungssteuermittelteilchen in ihrer zerteilten und unzerteilten Form gleichzeitig gut vom Bindemittel benetzt werden,
3. daß die Ladungssteuermittelteilchen in ihrer zerteilten Form homogen, d.h. statistisch gleichmäßig auf alle Volumenelemente des Bindemittels, verteilt sind und
4. dieser homogene Verteilungszustand erhalten bleibt und nicht durch Migration oder Rekristallisationseffekte nachträglich im Bindemittel verändert wird.

Die chemisch/physikalischen Eigenschaften eines Ladungssteuermittels hinsichtlich seines Dispergierverhalten sind im wesentlichen verknüpft mit:
Teilchengröße;
Nachbehandlung/Mahlung sowie Trocknung;
Kristallinität;
Thermostabilität;
Feuchtegehalt.

Für die Teilchengröße, definiert durch den d₅₀-Wert, finden sich stoffabhängig optimale Wirkbereiche. So sind beispielsweise große Teilchen (> 5 mm) zum Teil gar nicht oder nur mit einem erheblichen Zeit- und Energieaufwand dispergierbar, während sehr feine Teilchen im Submicron-Bereich ein erhöhtes sicherheitstechnisches Risiko, wie die Möglichkeit der Staubexplosion, bergen.

Die Teilchengröße und Form wird entweder durch die Synthese und/oder Nachbehandlung eingestellt und modifiziert. Häufig wird die geforderte Eigenschaft erst durch gezielte Nachbehandlung wie Mahlung/Trocknung möglich. Hierdurch kann eine Beeinflussung auch der Kristallinität resultieren, die über das Röntgenbeugungsdiagramm nachgewiesen und festgelegt werden kann.

Typischerweise handelt es sich bei den in der vorliegenden Erfindung erwähnten Bindemittelsystemen um hydrophobe Materialien. Hohe Wassergehalte des Ladungssteuermittels können entweder einer Benetzung entgegenstehen oder aber eine Dispergierung begünstigen (Flushen). Daher ist der praktikable Feuchtegehalt stoffspezifisch.

Die erfindungsgemäßen Einschlußverbindungen sind durch folgende chemisch/physikalische Eigenschaften gekennzeichnet:
1. Der Wassergehalt, nach der Karl-Fischer Methode bestimmt, liegt zwischen 0,001 % und 30 %, bevorzugt zwischen 0,01 und 25 % und besonders bevorzugt zwischen 0,1 und 20 %, wobei das Wasser adsorbiert und/oder gebunden sein kann, und sich dessen Anteil durch Temperatureinwirkung bis 200°C und Vakuum bis 10⁻⁸ Torr oder durch Wasserzugabe einstellen läßt.
2. Die Teilchengröße, mittels Coulter-Counter-Methode oder Laserlichtbeugung bestimmt und definiert durch den d₅₀-Wert, liegt zwischen 0,01 µm und 3000 µm, bevorzugt zwischen 0,1 und 1000 µm und ganz besonders bevorzugt zwischen 0,5 und 100 µm.
3. Die Kristallinität der Verbindungen, bestimmt durch die Röntgenbeugungs-Methode, ist hochkristallin bis teilkristallin oder auch röntgenamorph, vorzugsweise hochkristallin bis teilkristallin, erkennbar durch ausgeprägte Reflexe im Röntgenbeugungsdiagramm, aufgenommen mit 20-Werten im Bereich von 2 bis 80.

Besonders bevorzugt sind Einschluß-Verbindungen mit folgenden Eigenschaften:
•
   a) Durchgangswiderstand, bestimmt bei 1 kHz, zwischen 1 x 10³ Ohm x cm und 9 x 1016 Ohm x cm, bevorzugt zwischen 1 x 10⁵ Ohm x cm und 9 x 10¹⁵ Ohm x cm;
   b) der dielektrische Verlustfaktor tan delta, bestimmt bei 1 kHz, zwischen 9 x 10⁻¹ und 1 x 10⁻³, bevorzugt zwischen 5 x 10⁻¹ und 5 x 10⁻³ und
   c) eine Dielektrizitätszahl epsilon zwischen 1 und 20, bevorzugt zwischen 3 und 15.
• Die Thermostabiliät, die mittels Differentialthermoanalyse mit einer konstanten Aufheizgeschwindigkeit von 3K/Min bestimmt wird, ist größer als 200°C.

Gegenstand der vorliegenden Erfindung sind auch Einschluß-Verbindungen, bestehend aus einer Wirt-Verbindung, die ein ringförmig verknüpftes Polysaccharid mit 3 bis 100 monomeren Saccharideinheiten ist und in ihrem molekularen Grundgerüst einen Hohlraum bildet, sowie aus einer oder mehreren in diesen Hohlraum als Gast-Verbindung eingeschlossenen chemischen Verbindung(en), mit einer Feststoffteilchengröße zwischen 0,1 µm und 1000 µm, vorzugsweise 0,5 µm und 100 µm, mit einem Wassergehalt zwischen 0,1 bis 20 %, nach der Karl-Fischer-Methode bestimmt, und mit einer Thermostabilität größer als 200°C.

Gegenstand der vorliegenden Erfindung ist ferner ein Verfahren zur Herstellung einer Einschluß-Verbindung, dadurch gekennzeichnet, daß man das ringförmig verknüpfte Polysaccharid mit der Gast-Verbindung bei einem pH-Wert von 7 bis 14, vorzugsweise 8 bis 12, umsetzt und die entstandene Einschluß-Verbindung sprühtrocknet, oder trocknet und mahlt. Die molaren Verhältnisse zwischen Wirt und Gast-Verbindung können bei der Herstellung der Einschluß-Verbindungen in weiten Grenzen variieren, beispielsweise zwischen 0,1:10 bis 10:0,1.

Je nach Synthesebedingungen fallen häufig nach der Synthese grobkristalline Teilchen an, die einer Nachbehandlung, z.B. einer Mahlung, unterzogen werden müssen. Hierzu bieten sich verschiedene Mahltechniken an. Vorteilhaft sind beispielsweise Luftstrahlmühlen, Schneidmühlen, Hammermühlen, Perlmühlen, sowie Prallmühlen. Wichtig ist, daß durch die Mahlwirkung eine enge Teilchengröße resultiert. Bevorzugt ist ein Bereich Δ (d₉₅-d₅₀) von kleiner als 500 µm, insbesondere kleiner als 200 µm. Anstelle einer Mahlung kann auch eine Sprühtrocknung zweckmäßig sein.

Cyclodextrin-Einschlußverbindungen können doppelbrechende Eigenschaften aufweisen, insbesondere die Verbindungen 18 und 24 sind dadurch gekennzeichnet, daß sie als doppelbrechende Teilchen, begünstigt durch eine niedrige Kristallsymmetrie, die Polarisationsebene des polarisierten Lichtes drehen.

Mit den vorstehend genannten Verbindungen 4 bis 81, ohne sich auf diese zu beschränken, kann in Testtonern gezeigt werden, daß die Zugabe von 1 Gew.-% der Einschluß-Verbindungen die triboelektrische Aufladbarkeit in kleinsten Schritten zeitabhängig dirigiert werden kann. Für die triboelektrischen Prüfungen, deren Ergebnisse in nachstehender Tabelle 1 zusammengefaßt sind, wurden 1 % der Wirte 1 bis 3 und Verbindungen 4 bis 81 im Tonerbindemittel Styrol-Methacrylat-Copolymer 60:40 homogen mit einem Kneter dispergiert. Als Carrier werden mit Styrol-Methacrylat-Copolymer beschichtete Magnetit-Teilchen oder Ferrit-Teilchen der Größe 50 bis 200 µm (Schüttdichte 2,62 g/cm³) (FBM 100 A; Fa. Powder Techn.) verwendet.

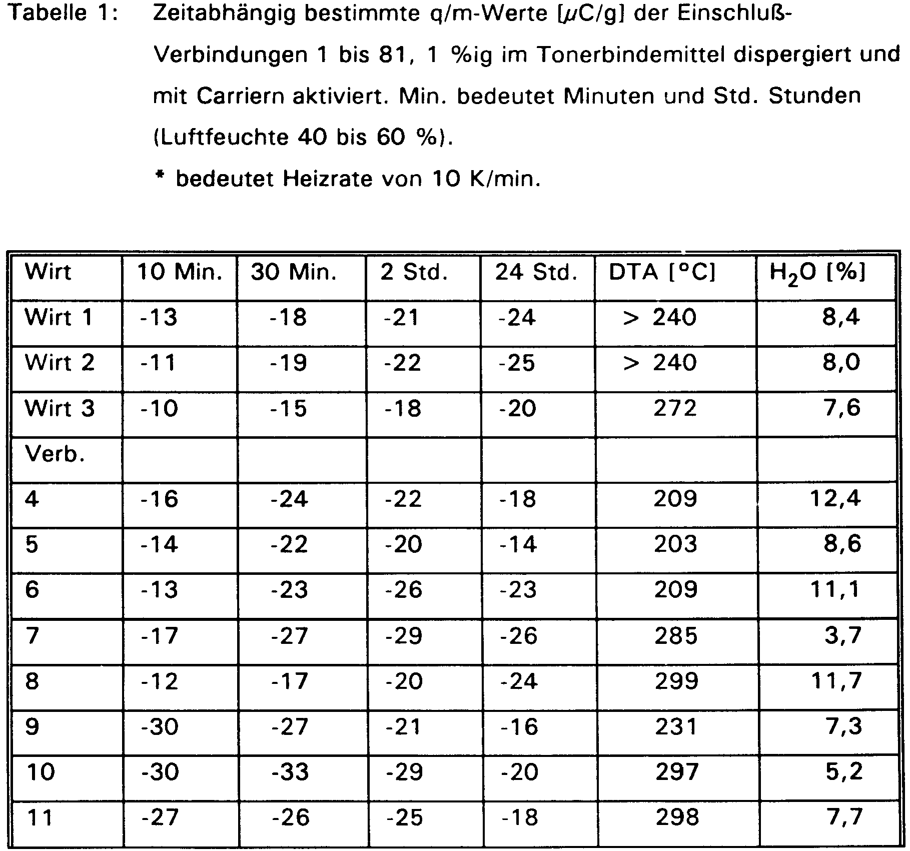

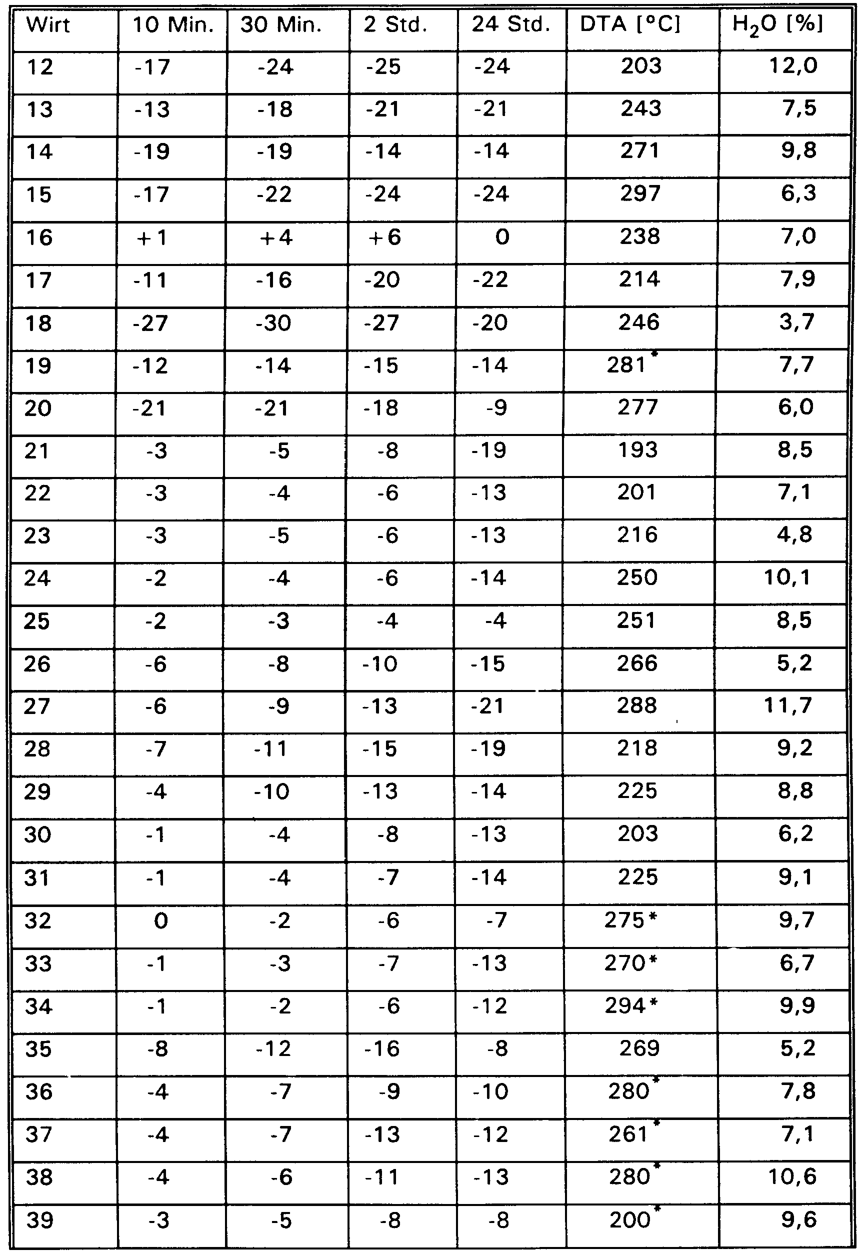

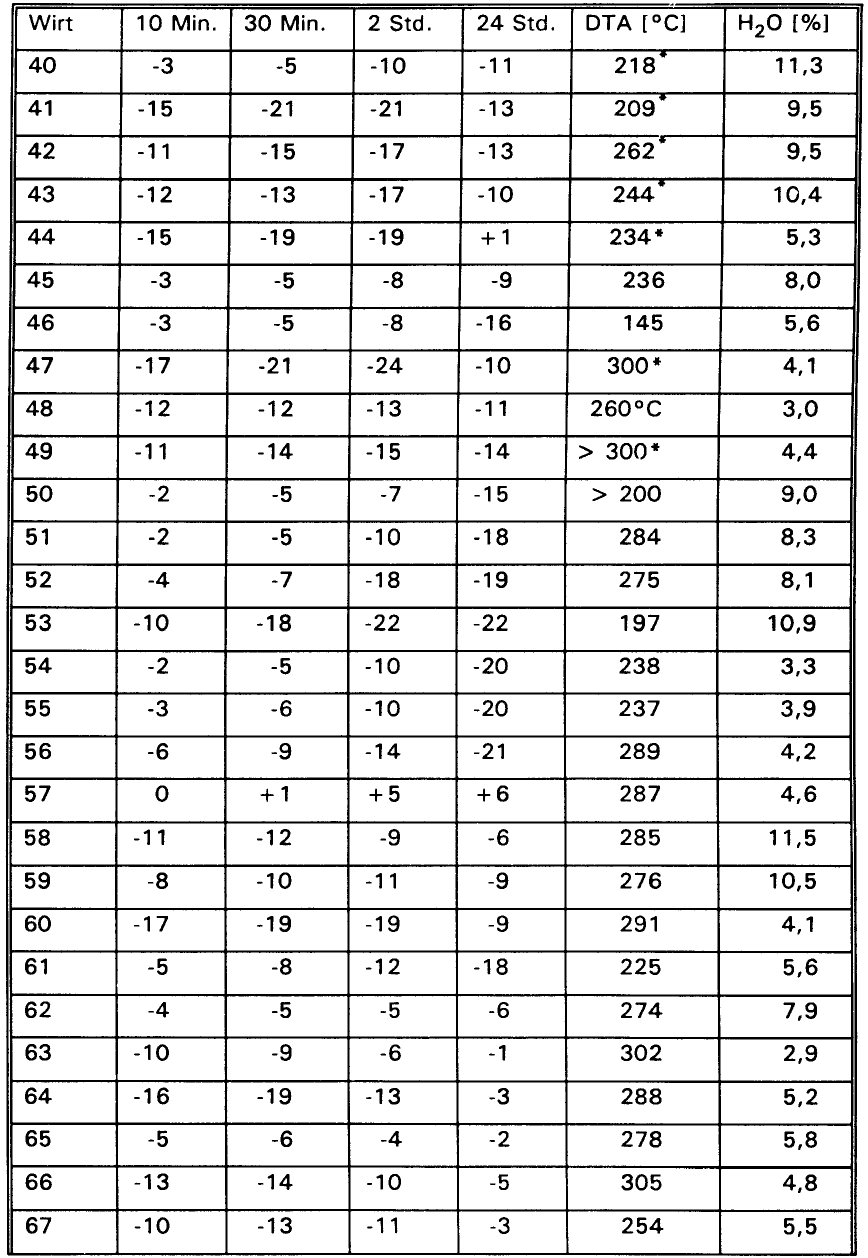

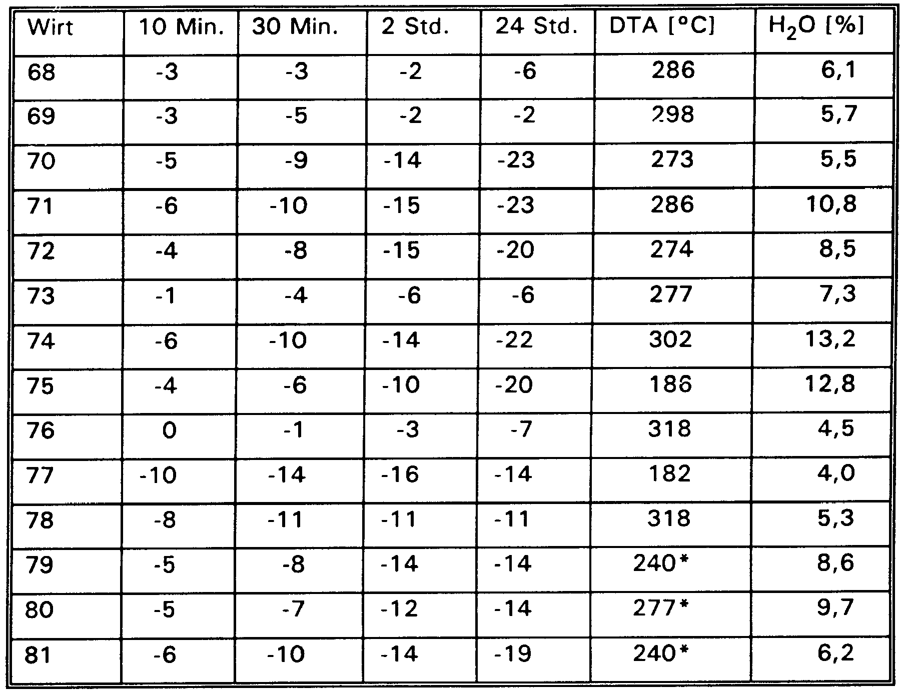

Aus Tabelle 1 ist ersichtlich, daß die Einschluß-Verbindungen überwiegend negative triboelektrische Ladungssteuereffekte aufweisen, jedoch kann durch eine entsprechende Wahl der Komponente G auch eine positive triboelektrische Aufladung der Bindemittelmatrix im Unterschied zum Wirt erzeugt werden (z.B. Verbindungen 16 und 57). Bis auf wenige Ausnahmen weisen alle Einschluß-Verbindungen sehr hohe Thermostabilitäten auf. Die Dispergiereigenschaften und die Ladungssteuer-Eigenschaften wie Höhe, Konstanz und Vorzeichen sind über einen weiten Feuchtegehalt stabil, so daß die erfindungsgemäß verwendeten Einschluß-Verbindungen schwankende Umgebungsbedingungen, z.B. Luftfeuchtigkeiten, kompensieren können. Die q/m-Werte belegen weiterhin, daß durch geeignete Wahl der Komponente G in einem weiten Bereich die für das tonerverarbeitende Kopiergerät nötige triboelektrische Grundeinstellung gewählt werden kann.

Ein besonderer Vorteil gegenüber den reinen Wirtverbindungen besteht in der Möglichkeit, selektiv die Triboaufladung des Bindemittels auf die gewünschte Höhe einzustellen. Daher steht durch Wahl der Konzentration der Einschlußverbindung und des Gastmoleküls G ein Baukastenmodell zu Verfügung, das beliebig zielgerichtet kombiniert werden kann und dem Nutzer und Anwender ein Maximum an anwendungstechnischer Flexibilität zur Feinjustierung der gewünschten triboelektrischen Aufladung im Anwendungssystem gestattet.

Je nach Anwendung kann dasjenige Ladungssteuermittel gewählt werden, das für die Zielanwendung am effektivsten vom Aufladungsniveau ist und sich am leichtesten dispergieren läßt. So ist für Pulverlackierungen eine erhöhte Thermostabilität, um z.B. Vergilbung zu vermeiden, vorteilhaft (beispielsweise Verbindung 10, 11, 15, 49, 60, 66).

Bei Kopiergeräten ist häufig ein schnelles Erreichen eines elektrostatischen Niveaus nötig. Insbesondere die Verbindungen 9, 10 und 11 zeigen deutliche Vorteile in der Kurzzeitaufladung gegenüber der reinen Wirt-Verbindung.

Weiterhin befinden sich in der Praxis Tonersysteme im Einsatz, die das Vorzeichen der elektrostatischen Toneraufladung durch die Carrier/Bindemittel-Wahl vorjustieren, jedoch für die Höhe und Langzeitstabilität Ladungssteuermittel zusätzlich benötigen. Hierzu sind vor allem ladungsregulierende Eigenschaften unabhängig von der absoluten Höhe der Aufladung nötig. Insbesondere die Verbindungen 25, 42, 19, 59 und 69 besitzen diese Eigenschaft. Dies stellt einen weiteren Vorteil gegenüber den reinen Wirt-Verbindungen dar, deren Werte nicht so selektiv wählbar sind.

Die hohe Effizienz wird besonders deutlich im Vergleich mit anderen Polysacchariden. So zeigen Xanthane, mit Molmassen um 2 Millionen, die aus β-1,4-gebundenen Glucose-Einheiten gebildet werden (Formel VII: Römpp, 9. Auflage, Bd. 6, S. 5075) 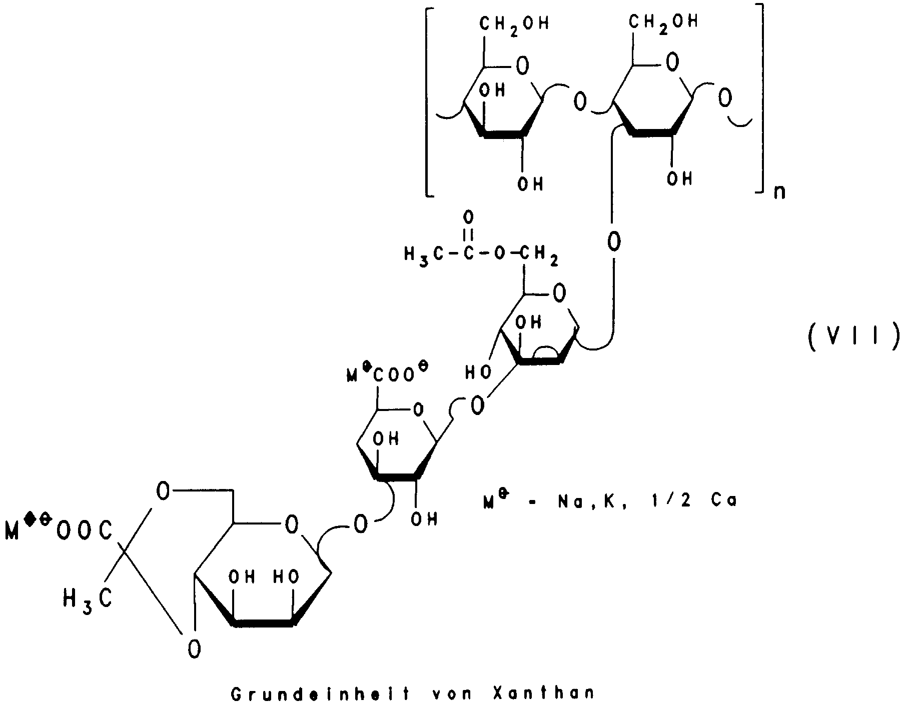 keinerlei Effizienz und nur geringe Thermostabilität. Xanthane können ebenso wie Cylodextrine kationische Ionen wie Na^{⊕} und K⁺ in Form von Salzen binden, bilden jedoch keinen Hohlraum (Cavität) aus. Dieser strukturelle Nachteil führt offensichtlich zu einer geringen triboelektrischen Effizienz im Vergleich zu Einschluß-Verbindungen. So zeigt ein Xanthan mit dem Handelsnamen ^{®}Rhodopol (Rhone Poulenc), analog Anwendungsbeispiel 1 eingearbeitet und vermessen, nach 10 Minuten eine Aufladung von -1 µC/g, nach 30 Minuten eine Aufladung von -3 µC/g, nach 2 Stunden von -7 und nach 24 Stunden von -17 µC/g (Vergleichsbeispiel: 2).
Bereits bei 150°C beginnt ein 1 %iger Testtoner obiger Zusammensetzung sich deutlich braun zu verfärben, worin die geringe Thermostabilität offenkundig wird, während ein Testtoner z.B. mit Verbindung 4 noch oberhalb 200°C völlig klar, d.h. transparent, bleibt und keine durch Zersetzung bedingte Verfärbung zeigt.

Ebenso läßt sich in Pulverlackbindemitteln eine deutliche Aufladbarkeitsverbesserung und die damit einhergehende höhere Abscheidequote sehr deutlich erkennen. Während das reine Bindemittel eine Aufladbarkeit von 1,8 bis 2,5 µA und damit einhergehend eine Abscheidequote von 63 % aufweist (Vergleichsbeispiel 3), läßt sich durch Zugabe von 18 Gew.-% der Verbindung 18 die Aufladbarkeit auf 2,3 bis 2,9 µA und die Abscheidequote auf 72 % verbessern (Anwendungsbeispiel 2). Durch die hohe Transparenz des Lacks in aufgeschmolzenem und ausgehärtetem Zustand sind die erfindungsgemäß eingesetzten Verbindungen auch besonders für Pulverlacke geeignet.

Die erfindungsgemäß verwendeten Verbindungen werden einzeln oder in Kombination miteinander in einer Konzentration von 0,01 bis 50 Gew.-%, vorzugsweise von 0,5 bis 20 Gew.-%, besonders bevorzugt von 0,1 bis 5,0 Gew.-%, bezogen auf die Gesamtmischung, in das Bindemittel des jeweiligen Toners, Entwicklers, Lacks, Pulverlacks, Elektretmaterials oder des elektrostatisch zu trennenden Polymers homogen, beispielsweise durch Extrudieren oder Einkneten, eingearbeitet. Dabei können die erfindungsgemäß eingesetzten Verbindungen als getrocknete und gemahlene Pulver, Dispersionen oder Lösungen, Preßkuchen, Masterbatches, Präparationen, angeteigte Pasten, als auf geeignete Träger, wie z.B. Kieselgel, TiO₂, Al₂O₃, aus wäßriger oder nichtwäßriger Lösung aufgezogene Verbindungen oder in sonstiger Form zugegeben werden. Ebenso können die erfindungsgemäß verwendeten Verbindungen grundsätzlich auch schon bei der Herstellung der jeweiligen Bindemittel zugegeben werden, d.h. im Verlauf von deren Polymerisation, Polyaddition oder Polykondensation.

Gegenstand der vorliegenden Erfindung ist auch ein elektrophotographischer Toner, Pulver oder Pulverlack, enthaltend ein übliches Tonerbindemittel, beispielsweise ein epoxid-, carboxyl- und hydroxylgruppenhaltiges Polyester- oder Acrylharz oder eine Kombination davon und 0,01 bis 50 Gew.-%, vorzugsweise 0,5 bis 20 Gew.-%, besonders bevorzugt 0,1 bis 5 Gew.-%, mindestens einer der genannten Einschlußverbindungen.

Bei elektrostatischen Trennvorgängen von Polymeren und insbesondere von (Salz-)Mineralien können die Ladungssteuermittel auch in den oben angegebenen Mengen extern, d.h. auf die Oberfläche des zu trennenden Gutes, aufgegeben werden.

Die Höhe der elektrostatischen Aufladung der elektrophotographischen Toner oder der Pulverlacke, in welche die erfindungsgemäßen Ladungssteuermittel homogen eingearbeitet werden, kann nicht vorhergesagt werden und wird an Standardtestsystemen unter gleichen Bedingungen (gleiche Dispergierzeiten, gleiche Teilchengrößenverteilung, gleiche Teilchenform) bei etwa 20°C und 50 % relativer Luftfeuchte gemessen. Die elektrostatische Aufladung des Toners erfolgt durch Verwirbelung mit einem Carrier, d.h. einem standardisierten Reibungspartner (3 Gewichtsteile Toner auf 98 Gewichtsteile Carrier), auf einer Rollbank (150 Umdrehungen pro Minute). Anschließend wird an einem üblichen q/m-Meßstand die elektrostatische Aufladung gemessen (J.H. Dessauer, H.E. Clark, "Xerography and related Processes", Focal Press, N.Y, 1965, Seite 289; J.F. Hughes, "Electrostatic Powder Coating", Research Studies Press Ltd. Letchworth, Hertfordshire, England, 1984, Chapter 2). Bei der Bestimmung des q/m-Wertes oder der Triboaufladung von Pulverlacken ist die Teilchengröße von großem Einfluß, weshalb bei den durch Sichtung erhaltenen Toner- oder Pulverlackproben streng auf einheitliche Teilchengrößenverteilung geachtet wird. So wird für Toner eine mittlere Teilchengröße von 10 µm angestrebt, während für Pulverlacke eine mittlere Teilchengröße von 50 µm praktikabel ist.

Die Triboversprühung der Pulver(lacke) wird mit einem Sprühgerät mit einem Normsprührohr und einer Sterninnenstange bei maximalem Pulverdurchsatz mit einem Sprühdruck von 3 bar durchgeführt. Der zu besprühende Gegenstand wird hierzu in einer Spritzkabine aufgehängt und aus ca. 20 cm Abstand direkt von vorne ohne weitere Bewegung des Sprühgerätes besprüht. Die jeweilige Aufladung des versprühten Pulvers wird anschließend mit einem "Meßgerät" zur Messung von triboelelektrischer Ladung von Pulvern" der Firma Intec (Dortmund) gemessen. Zur Messung wird die Meßantenne des Meßgerätes direkt in die aus dem Sprühgerät austretende Pulverwolke gehalten. Die aus der elektrostatischen Ladung von Pulverlack oder Pulver sich ergebende Stromstärke wird in µA angezeigt. Die Abscheidequote wird anschließend in % durch eine Differenzwiegung aus versprühtem und abgeschiedenem Pulverlack bestimmt.

In den nachstehenden Beispielen bedeuten "Min." "Minuten" und " Std." "Stunden".

### Anwendungsbeispiel 1 (elektrostatische Prüfung)

1 Teil der Verbindung 4 wird mittels eines Kneters innerhalb von 45 Min. in 99 Teile eines Tonerbindemittels (Styrol-Methacrylat-Copolymer 60:40) homogen eingearbeitet. Anschließend wird auf einer Labor-Universalmühle gemahlen und dann auf einem Zentrifugalsichter klassifiziert. Die gewünschte Teilchenfraktion (4 bis 25 µm) wird mit einem Carrier aktiviert, der aus mit Styrol-Methacrylat-Copolymer beschichteten Magnetit-Teilchen der Größe 50 bis 200 µm besteht (Schüttdichte 2,62 g/cm³) (FBM 100 A; Fa. Powder Techn.).

Die Messung erfolgt an einem üblichen q/m-Meßstand. Durch Verwendung eines Siebes mit einer Maschenweite von 25 µm wird sichergestellt, daß bei den Tonerausblasungen kein Carrier mitgerissen wird. Die Messungen erfolgen bei 50 % relativer Luftfeuchte. In Abhängigkeit von der Aktivierdauer werden die q/m-Werte [µC/g] gemessen.

Die Wirte 1 bis 3 und Verbindungen 5 bis 81 werden in gleicher Weise eingearbeitet und vermessen.

### Anwendungsbeispiel 2 (Pulverlackprüfung)

1 Teil der Verbindungen 18, 17 oder 9 werden wie in Anwendungsbeispiel 1 beschrieben in das Styrol/Acrylatharz eingearbeitet. Die nach der Sichtung erhaltene Teilchenfraktion > 25 µm wird mit einer Sprühpistole bei einem Luftdruck von 3 bar und 5 bar triboversprüht sowie die Aufladbarkeit und Abscheidequote bestimmt:

| Verbindung | Druck [bar] | Strom [µA] | Abscheidequote [%] |
|---|---|---|---|
| 18 | 3 | 1,5 - 1,8 | 72 % |
| | 5 | 2,3 - 2,9 | 72 % |
| 17 | 3 | 1,5 - 1,6 | 63 % |
| | 5 | 3,7 - 2,6 | 74 % |
| 9 | 3 | 1,7 - 1,9 | 62 % |
| | 3 | 3,0 - 3,6 | 67 % |

### Vergleichsbeispiel 1 (elektrostatische Prüfung):

Zur Messung unter Verwendung des reinen Styrol-Acrylat-Tonerbindemittels (Styrol-Methacrylat-Copolymer 60:40) wird wie in Anwendungsbeispiel 1 verfahren, ohne jedoch Zusatzstoffe einzukneten (Harzblindwert). Das Tonerbindemittel wird mit einem Carrier aktiviert, der aus Styrol-Methacrylat-Copolymer beschichteten Magnetit-Teilchen der Größe 50 bis 200 µm (Schüttdichte 2,62 g/cm³) besteht (FBM 100 A; Fa. Powder Techn.)

| Aktivierdauer | Aufladung q/m [µC/g] |
|---|---|
| 10 Min. | -7 |
| 30 Min. | -11 |
| 2 Std. | -16 |
| 24 Std. | -22 |

### Vergleichsbeispiel 2 (elektrostatische Prüfung):

1 Teil Rhodopol wird entsprechend Anwendungsbeispiel 1 eingearbeitet und vermessen

| Aktivierdauer | Aufladung q/m [µC/g] |
|---|---|
| 10 Min. | -1 |
| 30 Min. | -3 |
| 2 Std. | -7 |
| 24 Std. | -17 |

### Vergleichsbeispiel 3 (Pulverlackprüfung)

Das reine Styrol/Acrylatbindemittel ^{®}Dialac S309 wird ohne Zusatz wie in Anwendungsbeispiel 1 beschrieben, durch Kneten homogenisiert, gemahlen und gesichtet. Die Fraktion > 25 µm wird für die Pulverlackversprühung mit einer Sprühpistole wie in Anwendungsbeispiel 2 beschrieben versprüht und vermessen:

| Verbindung | Druck [bar] | Strom [µA] | Abscheidequote [%] |
|---|---|---|---|
| Harz | 3 | 18-2,5 | 57 % |
| | 5 | 2,6-4,0 | 67 % |

### Herstellungsbeispiel 1 (Allgemeine Form)

Es werden 0,02 Mol des ringförmig verknüpften Polysaccharids eingesetzt. Zur Reaktion wird die Komponente G in entionisiertem Wasser, organischem Lösemittel oder wäßrig/organischem Medium gelöst oder suspendiert. Zu dieser Lösung/Suspension wird das ringförmig verknüpfte Polysaccharid in gelöster, suspendierter oder fester Form zudosiert. Anschließendes Rühren, gegebenenfalls durch Erwärmen unterstützt, vervollständigt die Reaktion. In einer bevorzugten Variante kann durch Basenzusatz wie NaOH, Na₂CO₃ oder NH₄OH die Reaktion beschleunigt werden. Der pH wird hierbei auf 7 bis 14, bevorzugt auf 8 bis 12, eingestellt.
Die Reaktion ist abgeschlossen, wenn sich eine klare Lösung gebildet hat. Die klaren Reaktionslösungen werden vom Lösemittel getrennt, z.B. durch Eindampfen, Abdestillieren oder Sprühtrocknung, und der resultierende Feststoff wird bei erhöhter Temperatur, gegebenenfalls durch Vakuum und Trocknungsmittel unterstützt, getrocknet und gemahlen. Die erfolgreiche Synthese ist durch eine Änderung des thermischen Verhaltens, z.B. durch Differentialthermoanalyse, gegenüber dem reinen ringförmig verknüpften Polysaccharid nachweisbar.
Nach dem vorstehend beschriebenen Verfahren sind die Verbindungen 4 bis 81 hergestellt worden.

### Herstellungsbeispiel 2 (Verbindung 4)

0,84 g LiCl (0,02 Mol) werden in 60 ml entionisiertem Wasser gelöst. In diese Lösung werden 12,9 g des Wirts 3 in fester Form eingerührt. Durch Erwärmen auf 30 bis 100°C, bevorzugt 50 bis 80°C, entsteht eine klare Lösung, die nach dem Abkühlen klar und von dünnflüssiger Konsistenz bleibt. Im Vakuum wird bei 30 bis 100°C, bevorzugt bei 60 bis 90°C, das Wasser abgezogen und der verbliebene weiße Feststoff isoliert und gemahlen.
DTA: 209°C; d₅₀ = 33,3 µm; d₉₅ < 100 µm;
H₂O: 12,4 %; intensive Reflexe im Bereich (2Θ) von 15 bis 19 und 20 bis 24.

Zur weiteren Entfernung des Wassers kann der Feststoff erneut im Vakuum bei erhöhter Temperatur nachgetrocknet werden.
Es werden 13,3 g der Einschluß-Verbindung isoliert.

### Herstellungsbeispiel 3 (Verbindung 17)

In einer weiteren Variante werden 11,95 g des Wirts 2 (0,01 Mol) in 614 ml entionisiertem Wasser bei Raumtemperatur gelöst. Zu dieser Lösung wird eine Lösung aus 3,42 g Natrium-tetraphenylborat (0,01 Mol) in 31 ml entionisiertem Wasser unter Rühren zugegeben. Es bleibt eine klare Lösung bestehen, die anschließend auf 70°C erwärmt wird und nach dem Abkühlen im Vakuum eingeengt wird.
Danach wird im Vakuum bei erhöhter Temperatur bis zur Gewichtskonstanz getrocknet. Es verbleiben 14,3 g einer weißen pulverförmigen Einschluß-Verbindung.
DTA: 214°C; d₅₀ = 23,3 µm; d₉₅ < 100 µm;
H₂O: 7,9 %; intensive Reflexe im Bereich (2Θ) von 10 bis 15 und 17 bis 22.

### Herstellungsbeispiel 4 (Verbindung 18)

23,9 g des Wirts 2 (0,02 Mol) werden mit 13,3 g KNO₃ (0,13 Mol) in 200 ml entionisiertem Wasser suspendiert. Die Lösung wird anschließend mit wäßriger NaOH (33 %ig) auf pH 11 eingestellt, auf 40°C bis 80°C, bevorzugt auf 60°C, erhitzt und 30 Minuten gerührt. Nach dem Erwärmen bildet sich eine klare Lösung. Das Lösungsmittel wird unter Vakuum abdestilliert und der verbliebene Rückstand bei 60°C bis 140°C im Vakuum bis zur Gewichtskonstanz getrocknet. Es verbleiben 35 g eines weißen Feststoffes.
DTA: Zers. 246°C; d₅₀ = 23,9 µm; d₉₅ < 100 µM;
H₂O: 3,7 %; intensive Reflexe bei (2Θ) 17 bis 36.

### Herstellungsbeispiel 5 (Verbindung 10)

11,95 g des Wirts 2 (0,01 Mol) werden mit 19,73 g Zn(NO₃)₂ • 6H₂O (0,07 Mol) in 100 ml entionisiertem Wasser gelöst. Die Lösung wird anschließend mit wäßriger NaOH (33 %ig) auf pH 10 eingestellt, auf 40°C bis 80°C, bevorzugt auf 60°C, erhitzt und 30 Minuten gerührt. Nach dem Erwärmen bildet sich eine klare Lösung. Das Lösungsmittel wird unter Vakuum abdestilliert und der verbliebene Rückstand bei 80°C im Vakuum bis zur Gewichtskonstanz getrocknet. Es verbleiben 27,2 g eines weißen Feststoffes.
DTA: 297°C; d₅₀ = 4,2 µm; d₉₅ < 100 µM;
H₂O: 5,2 %; intensive Reflexe im Bereich (2Θ) von 27 bis 39.

## Patentansprüche

1. Verwendung von Einschluß-Verbindungen, bestehend aus einer Wirt-Verbindung, die ein ringförmig verknüpftes Polysaccharid mit 3 bis 100 monomeren Saccharideinheiten ist und in ihrem molekularen Grundgerüst einen Hohlraum bildet, sowie aus einer oder mehreren in diesen Hohlraum als Gast-Verbindung eingeschlossenen chemischen Verbindung(en), als Ladungssteuermittel und Aufladungsverbesserer in elektrophotographischen Tonern und Entwicklern, in triboelektrisch oder elektrokinetisch versprühbaren Pulvern und Pulverlacken und in Elektretmaterialien.

2. Verwendung nach Anspruch 1, **dadurch gekennzeichnet, daß** die Wirt-Verbindung eine 1,4-verknüpfte Pyranose der Formel (I) 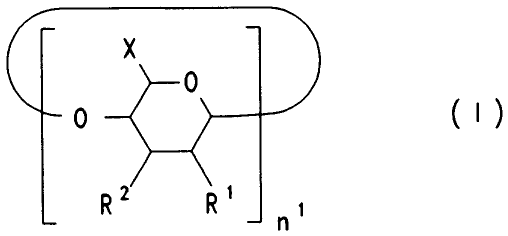 oder eine 1,6-verknüpfte Pyranose der Formel (II) 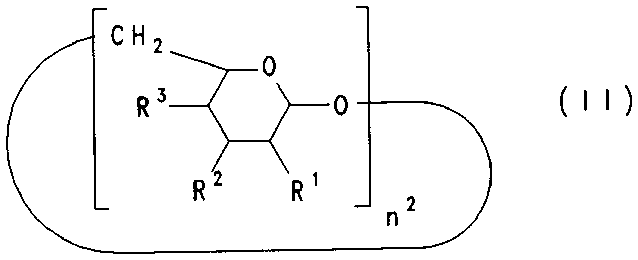 worin
n¹ eine Zahl von 6 bis 100,
n² eine Zahl von 3 bis 100,
R¹, R² und R³ unabhängig voneinander gleich oder verschieden sind und die Bedeutung Hydroxy; verzweigtes oder unverzweigtes, cyclisches oder offenkettiges C₁-C₃₀-Alkoxy; verzweigtes oder unverzweigtes, cyclisches oder offenkettiges C₂-C₃₀-Alkenoxy, wobei die genannten Alkoxy- und Alkenoxy-Reste teilweise oder vollständig fluoriert sein können; unsubstituiertes -O-Aryl(C₆-C₃₀), mit 1 bis 5 C₁-C₃₀-Alkylresten oder C₁-C₃₀-Alkoxyresten substituiertes -O-Aryl(C₆-C₃₀); -O-(C₁-C₄)-Alkyl-(C₆-C₃₀)aryl; -O-C₆₀-C₇₀-Fulleren; -O-(Alkylen(C₀-C₃₀)-YAlkyl(C₁-C₃₀))ₓ, -O-(Aryl(C₆-C₃₀)-Y-Aryl(C₆-C₃₀))ₓ, -O-(Aryl(C₆-C₃₀)-Y-Alkyl(C₁-C₃₀))ₓ, -O-(Alkylen(C₀-C₃₀)-Y-Aryl(C₆-C₃₀)-alkyl(C₀-C₄))ₓ, wobei x die Bedeutung 1 bis 30, vorzugsweise 1 bis 2, hat und Y eine chemische Bindung, O, S, SO, SO₂, PR⁴, PR⁴₃, Si, SiR₂⁴ oder NR⁴ bedeutet sowie die Reste R⁴ die Bedeutung Wasserstoff, C₁-C₄-Alkyl oder C₁-C₄-Alkoxy haben; eines -O-COR⁶-Restes, wobei R⁶ OH, gesättigtes oder ungesättigtes, verzweigtes oder unverzweigtes, cyclisches oder offenkettiges C₁-C₁₈-Alkyl, teilfluoriertes oder perfluoriertes (C₁-C₁₈)-Alkyl, Phenyl, C₁-C₁₈-Alkylphenyl;
einen -O-PR⁷₂-Rest oder -O-PR⁷₄-Rest, wobei R⁷ die Bedeutung Wasserstoff, Methyl, Ethyl, Propyl, Butyl, Vinyl, Allyl, Isopropyl, Isobutyl, Neopentyl, tert.-Butyl, Cyclohexyl, Cyclopentyl, Phenyl, Tolyl, Benzyl, teilfluoriertes oder perfluoriertes Alkyl-(C₁-C₁₈), sowie O, OH, S und NR⁸₂, worin R⁸ Wasserstoff, C₁-C₈-Alkyl oder Phenyl ist, bedeutet; den Rest -O-SO₂R⁹ bedeutet, in dem R⁹ die Bedeutung Methyl, Ethyl, Propyl, Butyl, Vinyl, Allyl, Isopropyl, Isobutyl, Neopentyl, tert.-Butyl, Cyclohexyl, Cyclopentyl, Phenyl, Tolyl, Benzyl,teilfluoriertes oder perfluoriertes Alkyl-(C₁-C₁₈), O, OR⁸, S oder NR⁸₂ hat;
den Rest -O-SiR¹⁰₃ bedeutet, in dem R¹⁰ die Bedeutung Methyl, Ethyl, Propyl, Butyl, Vinyl, Allyl, Isopropyl, Isobutyl, Neopentyl, tert.-Butyl, Cyclohexyl, Cyclopentyl, Phenyl, Tolyl, teilfluoriertes oder perfluoriertes Alkyl(C₁-C₁₈), O, OR⁸, S oder NR⁸₂ hat;
den Rest -O-BR¹¹₂ bedeutet, in dem R¹¹ die Bedeutung Methyl, Ethyl, Propyl, Butyl, Vinyl, Allyl, Isopropyl, Isobutyl, Neopentyl, tert.-Butyl, Cyclohexyl, Cyclopentyl, Phenyl, Tolyl, teilfluoriertes oder perfluoriertes Alkyl(C₁-C₁₈), O, OH, OR⁸, S oder NR⁸₂ hat;
einen Amino-Rest der Formel -NH₂, -NHR¹² oder -NR¹²₂ bedeutet, wobei R¹² gleiche oder verschiedene Reste eines C₁-C₃₀-aliphatischen, C₇-C₆₀-araliphatischen oder C₆-C₃₀-aromatischen Kohlenwasserstoffs, der durch ein bis 3 Heteroatome N, O oder/und S unterbrochen sein kann, ein perfluoriertes oder teilfluoriertes Alkyl(C₁-C₁₈);
oder worin das N-Atom des Amino-Restes Bestandteil eines gesättigten oder ungesättigten, aromatischen oder nichtaromatischen 5- bis 7-gliedrigen Ringsystems ist, das weitere der Heteroatome Stickstoff, Sauerstoff, Schwefel oder eine Kombination davon im Ring enthalten kann, und durch Ankondensation (Annellierung) von oder Verbrückung zu weiteren Ringsystemen modifiziert sein kann,
oder eines Ammonium-Restes -NR¹²₄ + A⁻, wobei A- ein anorganisches oder organisches Anion bedeutet;
oder einen Azid-Rest -N₃ bedeutet;
oder worin die Reste R¹ und R², oder R² und R³ gemeinsam ein Ringsystem der Formel 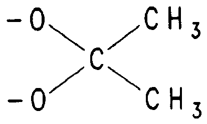 bilden;
und
X die Bedeutung -CH₂R¹, -CH₂-NO₂, -CH₂-Hal, wobei Hal Halogen bedeutet, -CH₂OH, -CH₂OCH₃, -CH₂OCO(C₁-C₄)alkyl, -CH₂-O-SiR₃⁴, -CH₂-O-trityl, -COOH, -COO(C₁-C₄)alkyl, -CH₂-O-SO₂-(C₁-C₄)-alkyl oder -CH₂-O-SO₂-C₆H₄-(C₁-C₄)-alkyl, hat.

3. Verwendung nach Anspruch 2, **dadurch gekennzeichnet, daß**
n¹ eine Zahl von 6 bis 80, vorzugsweise von 6 bis 60,
n² eine Zahl von 3 bis 60,
R¹, R² und R³ unabhängig voneinander die Bedeutung -O-(C₂-C₃-alkylen-O)ₓ-R⁵, worin R⁵ Wasserstoff, C₁-C₄-Alkyl, Acetyl, Benzoyl oder Naphthoyl und x eine Zahl von 1 bis 30 ist; -PO(OH)₂ oder -PO-(O-C₆H₅)₂ haben.

4. Verwendung nach Anspruch 2 oder 3, **dadurch gekennzeichnet, daß**
R¹, R², R³ unabhängig voneinander die Bedeutung Hydroxy, Methoxy, Ethoxy, Propyloxy, iso- Propyloxy, n-Butyloxy, iso-Butyloxy, tert.-Butyloxy, Vinyloxy, Allyloxy, Phenoxy, Benzyloxy, -O-CF₃, -O-(CH₂CH₂-O)ₓ-R⁵, -O-COR¹³, worin R¹³ ein C₁-C₈-Alkyl, Phenyl oder C₁-C₈-Alkyl-phenyl ist; oder eine Ammoniumgruppe -NR¹⁴R¹⁵, worin R¹⁴ und R¹⁵ unabhängig voneinander Wasserstoff, Methyl, Ethyl, n-Propyl, iso-Propyl, n-Butyl, iso-Butyl, tert.-Butyl, Allyl, Vinyl, Phenyl, Benzyl oder Tolyl ist oder worin das N-Atom Bestandteil eines Piperidinyl-, Morpholinyl-, Pyridinium- oder Chinolinium-Ringsystems ist;
oder eine Ammoniumgruppe -N^{⊕}HR¹⁴R¹⁵A'^{⊝}, worin A^{Θ} ein Borat-, Sulfat-, Chlorid-, Bromid-, Nitrat-, Cyanid-, Phosphat-, Carbonat-, Acetat- oder Alkoholat-Anion, und
X die Bedeutung -CH₂Cl, -CH₂Br, -COOCH₃, -CH₂-O-Si(CH₃)₃, -CH₂-O-SO₂-CH₃ oder -CH₂-O-SO₂-C₆H₄CH₃ hat.

5. Verwendung nach mindestens einem der Ansprüche 2 bis 4, **dadurch gekennzeichnet, daß** die Wirt-Verbindung ein 1,4-verknüpftes Cyclodextrin der Formel (I) ist, worin R¹ und R² jeweils OH sind, X die Bedeutung CH₂OH hat und n¹ eine Zahl von 6 bis 8 ist.

6. Verwendung nach mindestens einem der Ansprüche 1 bis 5, **dadurch gekennzeichnet, daß** die Gastverbindungen Alkohole, verzweigt oder unverzweigt, gesättigt oder ungesättigt, substituiert oder unsubstituiert, aromatisch oder aliphatisch, cyclisch oder geradkettig;
Ketone, verzweigt oder unverzweigt, gesättigt oder ungesättigt,
substituiert oder unsubstituiert, aromatisch oder aliphatisch, cyclisch oder geradkettig;
Aldehyde, verzweigt oder unverzweigt, gesättigt oder ungesättigt,
substituiert oder unsubstituiert, aromatisch oder aliphatisch, cyclisch oder geradkettig;
Carbonsäuren, verzweigt oder unverzweigt, gesättigt oder ungesättigt,
substituiert oder unsubstituiert, aromatisch oder aliphatisch, cyclisch oder geradkettig;
Polyalkohole, verzweigt oder unverzweigt, gesättigt oder ungesättigt, substituiert oder unsubstituiert, aromatisch oder aliphatisch, cyclisch oder geradkettig;
Chinone, substituiert oder unsubstituiert;
Zucker, verzweigt oder unverzweigt, gesättigt oder ungesättigt,
substituiert oder unsubstituiert;
Ether, verzweigt oder unverzweigt, gesättigt oder ungesättigt, substituiert oder unsubstituiert, aromatisch oder aliphatisch, cyclisch oder geradkettig;
Mercaptane, verzweigt oder unverzweigt, gesättigt oder ungesättigt, substituiert oder unsubstituiert, aromatisch oder aliphatisch, cyclisch oder geradkettig;
Cyano-Verbindungen, verzweigt oder unverzweigt, gesättigt oder ungesättigt, substituiert oder unsubstituiert, aromatisch oder aliphatisch, cyclisch oder geradkettig;
aromatische oder aliphatische Nitroverbindungen;
primäre, sekundäre oder tertiäre Amine NR₃, wobei R die Bedeutung von H, OH, Halogen oder eines Kohlenwasserstoff-Rests hat, der verzweigt oder unverzweigt, gesättigt oder ungesättigt, substituiert oder unsubstituiert, aromatisch oder aliphatisch, cyclisch oder geradkettig ist; metallorganische Verbindungen, vorzugsweise Ferrocen oder Metallalkyle; Borverbindungen BR₃ und BR₄⁻, wobei R wie vorstehend definiert ist; Siliciumverbindungen SiR₄, wobei R wie vorstehend definiert ist;
Phosphorverbindungen PR'₃, PR'₅ oder PR'₆, wobei R' die Bedeutung von H, O, S, OH, Halogen oder eines organischen Rests hat;
Schwefelverbindungen SR'₂, SR'₃, -SO₃⁻, SR'₄, wobei R' wie vorstehend definiert ist;
Ammonium-Verbindungen NR₄⁺, wobei R wie vorstehend definiert ist; anorganische Kationen, vorzugsweise einwertige, zweiwertige, dreiwertige oder vierwertige Metallkationen;
ein- oder zweiwertige organische Anionen, vorzugsweise Carboxylat, Phenolat, Mercaptat oder Alkoholat; oder anorganische Anionen oder Salze aus einem der genannten organischen oder anorganischen Anionen mit einem der genannten Kationen.

7. Verwendung nach mindestens einem der Ansprüche 1 bis 6, **dadurch gekennzeichnet, daß** die Gastverbindungen C₁-C₃₀-aliphatische, C₂-C₃₀-olefinisch ungesättigte oder C₃-C₃₀-cycloaliphatische Alkohole; C₃-C₃₀-aliphatische, C₄-C₃₀-olefinisch ungesättigte, C₄-C₃₀-cycloaliphatische oder C₈-C₃₀-aromatische Ketone; C₁-C₃₀-aliphatische, C₃-C₃₀-olefinisch ungesättigte,C₄-C₃₀-cycloaliphatische oder C₇-C₃₀-aromatische Aldehyde; C₁-C₃₀-aliphatische, C₃-C₃₀-olefinisch ungesättigte, C₄-C₃₀-cycloaliphatische oder C₇-C₃₀-aromatische Carbonsäuren; C₂-C₃₀-aliphatische, C₄-C₃₀-olefinisch ungesättigte oder C₈-C₃₀-aromatische Dicarbonsäuren; C₂-C₃₀-aliphatische, C₃-C₃₀-olefinisch ungesättigte, C₃-C₃₀-cycloaliphatische oder C₆-C₃₀-aromatische Polyalkohole mit 2 bis 10 OH-Gruppen ; C₆-C₃₀-Hydroxyaromaten; Chinone mit 6 bis 30 Kohlenstoffatomen; Mono- und Disaccharide; C₂-C₃₀-aliphatische, C₃-C₃₀-olefinisch ungesättigte, C₄-C₃₀-cycloaliphatische, C₇-C₃₀-araliphatische und aromatische Ether; Polyether mit 3 bis 100 Ethoxy- und/oder Propoxy-Einheiten; NH₃, Mono-(C₁-C₁₈)-alkyl-, Di-(C₁-C₁₈)-alkyl- und Tri-(C₁-C₁₈)-alkylamine, stickstoffhaltige Heterocyclen; Aminosäuren; Alkali- und Erdalkalimetall-Kationen, Zn²⁺, Mn²⁺, co²⁺, Fe³⁺ und Al³⁺; NO₃⁻, OH⁻, HSO₄⁻, SO₄²⁻, HSO₃⁻, SO₃²⁻, S₂⁻, S₂O₃²⁻, HCO₃⁻, CO₃²⁻, H₂PO₄⁻, HPO₄²⁻, PO₄³⁻, CN⁻, CF₃SO₃⁻, CF₃COO⁻, F⁻, Cl⁻, Br⁻, I⁻, PF₆⁻, Zinktetracyanat, Perchlorat, SiF₆²⁻, Tetrafluoroborat, Tetraphenylborat; gesättigtes oder ungesättigtes aliphatisches oder cycloaliphatisches oder aromatisches Carboxylat oder Sulfonat; sowie Disulfo-pyrrolidiniumbetaine der Formel (IV) 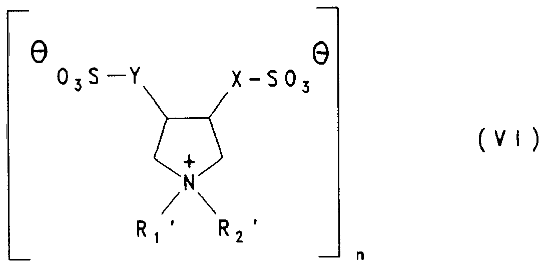 worin
R₁' und R₂' Wasserstoff, Alkyl(C₁-C₅)- oder Alkoxy(C₁-C₅)-Reste, Polyoxalkylen-Reste, bevorzugt Polyoxethylen- oder Polyoxpropylen-Reste, der allgemeinen Formel (Alkylen(C₁-C₅)-O)n-R bedeuten, worin R ein Wasserstoffatom oder einen Alkyl(C₁-C₄)-Rest bedeutet und n eine Zahl von 1 bis 10 ist, und X und Y jeweils Alkylen(C₁-C₅) bedeuten.

8. Verwendung nach mindestens einem der Ansprüche 1 bis 7, **dadurch gekennzeichnet, daß** das ringförmig verknüpfte Polysaccharid (Wirt-Verbindung) aus jeweils gleichen oder enantiomeren Saccharid-Einheiten oder aus Enantiomeren-Mischungen dieser Einheiten besteht, in denen die Reste R¹, R², R³ und X jeweils gleiche Bedeutung haben.

9. Verwendung nach mindestens einem der Ansprüche 1 bis 8, **dadurch gekennzeichnet, daß** eine Mischung oder ein Mischkristall von Einschluß-Verbindungen mit gleichen oder verschiedenen Gast-Verbindungen eingesetzt wird.

10. Elektrophotographischer Toner, enthaltend ein übliches Tonerbindemittel und 0,01 bis 50 Gew.-%, vorzugsweise 0,5 bis 20 Gew.-%, mindestens einer Einschluß-Verbindung nach einem oder mehreren der Ansprüche 1 bis 9.

11. Verfahren zur Herstellung eines elektrophotographischen Toners nach Anspruch 10, **dadurch gekennzeichnet, daß** die Einschluß-Verbindung homogen in das Tonerbindemittel eingearbeitet wird.

12. Pulver oder Pulverlack, enthaltend ein epoxid-, carboxyl- oder hydroxylgruppenhaltiges Polyester- oder Acrylharz oder eine Kombination daraus und 0,01 bis 50 Gew.%, vorzugsweise 0,5 bis 20 Gew.-%, mindestens einer Einschluß-Verbindung nach einem oder mehreren der Ansprüche 1 bis 9.

13. Verfahren zur Herstellung eines Pulvers oder Pulverlacks nach Anspruch 12, **dadurch gekennzeichnet, daß** die Einschluß-Verbindung homogen in das Harz eingearbeitet wird.

14. Einschluß-Verbindung, bestehend aus einer Wirt-Verbindung, die ein ringförmig verknüpftes Polysaccharid mit 3 bis 100 monomeren Saccharideinheiten ist und in ihrem molekularen Grundgerüst einen Hohlraum bildet, sowie aus einer oder mehreren in diesen Hohlraum als Gast-Verbindung eingeschlossenen chemischen Verbindung(en), mit einer Feststoffteilchengröße zwischen 0,1 µm und 1000 µm, vorzugsweise 0,5 µm und 100 µm, mit einem Wassergehalt zwischen 0,1 und 20 %, nach der Karl-Fischer-Methode bestimmt, und mit einer Thermostabilität größer als 200°C.

15. Einschluß-Verbindung nach Anspruch 14, **dadurch gekennzeichnet, daß** die Wirtverbindung wie in einem oder mehreren der Ansprüche 2 bis 5 definiert und die Gastverbindung wie in Anspruch 6 oder 7 definiert ist.

16. Einschluß-Verbindung nach Anspruch 14 oder 15, **dadurch gekennzeichnet, daß** die Wirt-Verbindung wie in Anspruch 5 definiert ist und die Gastverbindung LiCl, ZnCl₂, SrCl₂, Octadecyl-3-(3,5-di-tert.-butyl-4-hydroxyphenyl)-propionat, Na₂CO₃, NaBF₄, Zn(NO₃)₂, CdCl₂, FeSO₄, Oxalsäure, NaB(C₆H₅)₄, KNO₃, Cocosalkyldimethylbenzylammoniumchlorid, Salicylsäure, Stearinsäure, MnSO₄, Triphenylamin, Na-trifluormethansulfonat, CH₃COONa, p-Benzochinon, Anthracen, 2,5-Di-tert.-butyl-hydrochinon, Triethylamin, Tetramethylphosphoniumchlorid, Ferrocen, KPF₆, K₂MoO₄, Ascorbinsäure, K-Sorbat, Gluconsäure, DL-Äpfelsäure, Tripentaerythrit, Adonit, Hydrindantin, Ca(NO₃)₂, CaSO₄, Al(NO₃)₃, Propionsäure, Bis[3,3-bis-4'-hydroxy-3'-tert.-butylphenyl)-butansäure]-glykolester, Pentaerythrityl-tetrakis-[3,5-di-tert.-butyl-4-hydroxyphenyl-propionat], β,β'-Thio-di(propionsäure-laurylester),
β,β'-Thio-di(propionsäure-stearylester), Di-octadecyl-disulfid, Tris-(2,4-di.-tert.-butylphenyl)phosphit, C₁₂/C₁₄-Alkyltrimethylammonium-Cl, Benzoesäure,
Didecyldimethylammonium-chlorid,
Didecylmethylalkoxyammoniumpropionat,
Poly(diallyldimethylammoniumchlorid), K₂CO₃,
N-(Trihydroperfluoralken)-N,N,N-trialkylammoniummethosulfat,
2,4,5,2',3',4'-Hexahydroxybenzophenon, 2,4,6-Trihydroxybenzoesäure oder 1,1,1-Trihydroxymethylethan ist.

17. Verfahren zur Herstellung einer Einschluß-Verbindung nach einem oder mehreren der Ansprüche 14 bis 16, **dadurch gekennzeichnet, daß** man das ringförmig verknüpfte Polysaccharid mit der Gast-Verbindung bei einem pH-Wert von 7 bis 14, vorzugsweise 8 bis 12, umsetzt, die entstandene Einschluß-Verbindung sprühtrocknet, oder trocknet und mahlt.
